# EUROPÄISCHE PATENTSCHRIFT

(11) **EP 2 572 938 B1**
(45) Veröffentlichungstag und Bekanntmachung des Hinweises auf die Patenterteilung: **12.11.2014**
(21) Anmeldenummer: 12008185.6
(22) Anmeldetag: 30.11.2010
(51) Int. Cl.: B60R 9/10

(54) **Lastenträger mit einem Schlitten und einer Halteeinrichtung**
Load holder with a carriage and a holder device
Support de charges doté d'un chariot et d'un dispositif de retenue

(30) Priorität: 09.12.2009 DE 102009057668
(43) Veröffentlichungstag der Anmeldung: 27.03.2013
(62) Teilanmeldung aus: 10400059.1
(73) Patentinhaber: WESTFALIA - Automotive GmbH, 33378 Rheda-Wiedenbrück (DE)
(72) Erfinder: Hermbusch, Gerhard, 33449 Langenberg (DE); Wyrwich, Martin, 33378 Rheda-Wiedenbrück (DE)
(74) Vertreter: Bregenzer, Michael

(56) Entgegenhaltungen:
- DE-A1- 10 231 963

## Beschreibung

Die Erfindung betrifft einen Lastenträger für ein Fahrzeug, insbesondere einen Personenkraftwagen, mit einer Schlitten-Führungsbasis zur Montage an einer Lastenträgeraufnahme des Fahrzeugs und mit einem an der Schlitten-Führungsbasis geführten, zwischen einer Ruhestellung und einer Gebrauchsstellung verstellbaren Schlitten, wobei der Schlitten in der Gebrauchsstellung bei am Fahrzeug montiertem Lastenträger zum Tragen einer Last vor ein Heck des Fahrzeugs vorsteht, und mit einer mindestens ein Halteglied aufweisenden Halteeinrichtung, die in einer Haltestellung den Schlitten in mindestens einer Stellung bezüglich der Schlitten-Führungsbasis hält und in einer Freigabestellung den Schlitten zu einer Verstellung bezüglich der Schlitten-Führungsbasis freigibt.

Ein derartiger Lastenträger geht z.B. aus DE 102 31 963 A1 hervor.

Lastenträger, die in der Art einer Schublade aus dem Heck eines Kraftfahrzeuges ausfahrbar sind, sind bekannt. Beispielsweise hat die Schlitten-Führungsbasis Führungsschienen, an denen Läuferschienen schiebebeweglich, d.h. längsbeweglich, gelagert sind. Ein solcher Lastenträger geht beispielsweise aus der nicht vorveröffentlichten DE 10 2009 022 622 hervor, wobei zum Halten und Verspannen des Schlittens manuell betätigbare Halteeinrichtungen vorgesehen sind.

Allerdings erfordert die manuelle Handhabung der Halteeinrichtung ein gut zugängliches Betätigungselement oder eine relativ umständliche Verlegung mechanischer Übertragungselemente, beispielsweise eines Bowdenzugs, um die das Betätigungselement zugänglich anzuordnen.

Daher ist es die Aufgabe der vorliegenden Erfindung, einen Lastenträger mit einer verbessert bedienbaren Halteeinrichtung bereitzustellen.

Zur Lösung der Aufgabe ist ein Lastenträger gemäß der technischen Lehre des Anspruchs 1 vorgesehen.

Die Halteeinrichtung weist einen mit einem Antriebsschalter schaltbaren elektrischen oder fluidischen Halteantrieb zum Verstellen des mindestens einen Halteglieds in die Haltestellung und/oder die Freigabestellung auf.

Der Antriebsschalter, der zweckmäßigerweise einen Bestandteil des Lastenträgers oder einer den Lastenträger umfassenden Lastenträgeranordnung bildet, ist verhältnismäßig frei positionierbar, z.B. im Innenraum des Kraftfahrzeuges. Es genügt eine fluidtechnische oder elektrische Leitung zum Antriebsschalter.

Der Halteantrieb kann beispielsweise zum Verstellen des Halteglieds in die Haltestellung und/oder auch die Freigabestellung vorgesehen sein. So ist es beispielsweise möglich, dass das mindestens eine Halteglied durch eine Federanordnung in die Haltestellung federbelastet ist. In die Gegenrichtung, d.h. in die Freigabestellung, wirkt nunmehr der erfindungsgemäße Halteantrieb. Es ist auch möglich, dass das Halteglied durch eine Federanordnung in die Freigabestellung belastet ist und der Halteantrieb das Halteglied in die Haltestellung antreibt. Der Halteantrieb kann z.B. einen Elektromagneten, einen Elektromotor und/oder einen fluidtechnischen Motor, z.B. pneumatischen Motor umfassen.

Weiter kann der Halteantrieb über ein Getriebe auf das Halteglied wirken, das auch zweckmäßigerweise einen Bestandteil des Halteantriebs bilden kann. Das Getriebe umfasst z.B. ein Zahngetriebe, ein Keilgetriebe oder dergleichen. Das Getriebe ist zweckmäßigerweise selbsthemmend, z.B. aufgrund einer passenden Schrägneigung einer Keilschräge und/oder mittels eines selbsthemmenden Spindeltriebs oder dergleichen.

Der Halteantrieb kann zweckmäßigerweise ein Spanngetriebe aufweisen oder auch ein Klemmgetriebe. Es ist also möglich, dass zwischen dem Halteglied und dem Halteantrieb ein Spanngetriebe und/oder Klemmgetriebe vorhanden ist. Das Getriebe ist vorzugsweise ein Übersetzungsgetriebe, so dass die Kraft des Halteantriebs bzw. eines Motors des Halteantriebs verstärkt wird, wenn sich dieser bewegt.

Selbstverständlich kann der Halteantrieb ein Drehantrieb sein oder auch ein Linearantrieb.

Weiterhin ist es möglich, dass zwischen dem Halteantrieb-Motor und dem Halteglied beispielsweise auch ein Seilzug vorhanden ist. Selbstverständlich könnte auch eine Zahnriemenanordnung vorgesehen sein. Mithin kann also ein Übertragungsgetriebe zwischen dem Motor des Halteantriebs und dem Halteglied vorhanden sein, so dass eine größere Entfernung zwischen dem Motor des Halteantriebs und dem Halteglied möglich ist. Das Übertragungsgetriebe kann beispielsweise eine Stange, einen Seilzug, einen Bowdenzug oder dergleichen umfassen.

Wenn die Halteeinrichtung den Schlitten freigibt, kann dieser beispielsweise von Hand oder motorisch verstellt werden, um die Haltestellung und/oder die Freigabestellung zu erreichen.

Das Halteglied kann in einer bevorzugten Ausführungsform einen Riegel umfassen. Die Halteeinrichtung könnte man dann auch als Verriegelungseinrichtung bezeichnen. Es versteht sich, dass auch mehrere Riegel vorgesehen sein können.

Eine weitere Variante der Erfindung sieht vor, dass das Halteglied ein Formschlussglied umfasst, das zu einem Formschluss mit einer Formschlussgegenkontur, beispielsweise am Schlitten, ausgestaltet ist. Wenn das Formschlussglied formschlüssig in die Formschlussgegenkontur eingreift bzw. mit dieser in formschlüssigem Eingriff ist, wird dadurch der Halt des Schlittens relativ zur Schlitten-Führungsbasis bewirkt.

Aber auch ein Verklemmen oder Verspannen des Schlittens durch die Halteeinrichtung ist möglich, so dass dieser bezüglich der Schlitten-Führungsbasis verspannt bzw. verklemmt ist. In diesem Fall umfasst das Halteglied beispielsweise ein Spannelement.

Der erfindungsgemäße Gedanke, der selbstverständlich nicht nur bei Lastenträgern mit einem Schlitten, sondern auch bei Lastenträgern, bei denen beispielsweise ein Tragegestell schwenkbar und/oder verschiebbar bezüglich einer Tragbasis ist, sieht vor, dass das Halteglied sowohl zum Verriegeln, als auch zum Spannen und/oder Klemmen ausgestaltet ist. Beispielsweise hat das Halteglied in dieser Ausgestaltung der Erfindung eine Riegelfläche und eine Spannfläche und/oder Klemmfläche. Die Riegelfläche oder die Spannfläche sind bezogen auf die Verriegelungsbewegung oder Entriegelungsbewegung des mindestens einen Halteglieds benachbart zueinander, z.B. nebeneinander angeordnet. Sie wirken mit einer Verriegelungsgegenkontur und einer Klemmgegenkontur bzw. Spanngegenkontur zusammen. Bei der Verriegelungsbewegung läuft die Kinematik nun so ab, dass zunächst die Riegelfläche und die Verriegelungsgegenkontur in Eingriff miteinander gelangen oder zumindest nebeneinander angeordnet sind, dann erst die Spannfläche mit der Spanngegenkontur oder die Klemmfläche mit der Klemmgegenkontur in Eingriff gelangen. Somit kann also das Halteglied zunächst eine Verriegelung des Schlittens oder des zu verriegelnden Bauteils des Lastenträgers und anschließend eine Verklemmung des Bauteils, insbesondere des Schlittens, bewirken. Dieser Gedanke soll also, wie gesagt, nicht nur auf die Kombination eines Schlittens bezüglich einer Schlittenführungsbasis als innovativ angesehen werden, sondern ist auch bei Lastenträgern zweckmäßig einsetzbar, bei denen ein bewegliches Bauteil relativ zu einem ortsfesten Bauteil, z.B. einem Gestell, das an einer Anhängekupplung befestigt werden kann, zu verriegeln und zweckmä-ßigerweise auch anschließend zu verklemmen bzw. zu verspannen ist. Somit ist ein "klapperfreier" Fahrbetrieb möglich.

Das Entriegeln bzw. Entspannen verläuft sinngemäß umgekehrt, so dass das Halteglied zunächst die Verspannung oder Verklemmung aufhebt, anschließend die Verriegelung.

Weiterhin muss selbstverständlich bei dieser vorgenannten Kombination von Verriegeln und Verspannen und/oder Verklemmen nicht notwendig auch ein elektrischer oder fluidischer Halteantrieb vorgesehen sein, sondern es könnte prinzipiell auch ein manueller Halteantrieb vorgesehen sein oder auch eine manuelle Betätigung eines Halteglieds direkt. Mithin kann also ein Bediener beispielsweise über einen Spindeltrieb auf das Halteglied einwirken, das zunächst eine Verriegelung, anschließend eine Verklemmung oder Verspannung der relativ zueinander beweglichen Bauteile des Lastenträgers herstellt bzw. umgekehrt verfährt, wenn entriegelt bzw. entspannt werden soll.

Die Schlitten-Führungsbasis umfasst zweckmäßigerweise Führungsschienen, an denen Läuferschienen des Schlittens geführt sind.

Das Halteglied, beispielsweise der Riegel oder das Formschlussglied, greift vorteilhaft in der Haltestellung in die Führungsschienen und/oder die Läuferschienen ein. Wenn sowohl die Führungs- als auch die Läuferschienen durchgriffen sind, wird dadurch ein besonders fester relativer Halt des Schlittens bezüglich der Schlitten-Führungsbasis erzielt. Es ist aber auch möglich, dass das Halteglied einen Längsanschlag für eine oder beide der Läuferschienen bildet.

Bevorzugt ist eine Steuerung für den Halteantrieb vorgesehen.

Die Steuerung kann beispielsweise so ausgestaltet sein, dass sie den Halteantrieb periodisch wiederholt mit Energie versorgt, beispielsweise bestromt oder fluidtechnisch ansteuert, wobei diese Energieversorgung von einer vorigen Betätigung durch den Antriebsschalter abhängt. Wird also der Halteantrieb durch den Antriebsschalter in Richtung der Haltestellung betätigt, taktet die Steuerung sozusagen nach und beaufschlagt den Halteantrieb immer wieder in Richtung der Haltestellung. Dadurch wird einem unbeabsichtigten Lösen des Halteglieds vorgebeugt. Auch das umgekehrte ist möglich, dass nämlich die Steuerung den Halteantrieb in Richtung der Freigabestellung periodisch mit Energie versorgt, wenn zuvor von einem Bediener der Befehl zum Schalten in Richtung der Freigabestellung gegeben worden ist.

Der Antriebsschalter kann aufgrund der Erfindung beliebig positioniert werden, beispielsweise im Innenraum des Kraftfahrzeuges, insbesondere im Cockpit, in einem Gepäckabteil oder dergleichen. Bevorzugt ist die Anordnung des Antriebsschalters in einem Außenbereich des Fahrzeugs. Dazu ist der Antriebsschalter beispielsweise in einer passenden elektrischen Schutzart ausgestaltet, weist insbesondere einen Spritzwasserschutz auf, z.B. mit Schutzart IP 44.

Bei der Anordnung im Außenbereich ist es vorteilhaft, wenn der Antriebsschalter am Schlitten, beispielsweise hinter oder an einem Kennzeichenträger des Schlittens, angeordnet ist. Weiterhin ist es möglich, dass der Antriebsschalter eine Halterung zur Befestigung am Heck des Fahrzeugs aufweist oder zur Befestigung am Heck des Kraftfahrzeuges ausgestaltet ist. Diese Anordnung hat den großen Vorteil, dass der Bediener zugleich den Antriebsschalter betätigen kann und den Schlitten in einem Greifbereich hat. Wenn also der Schlitten beispielsweise durch die Auswurf-Federanordnung ausgeworfen wird, wenn die Halteeinrichtung in die Freigabestellung verstellt ist, kann der Bediener den Schlitten unmittelbar ergreifen. Dies ist insbesondere dann vorteilhaft, wenn das Fahrzeug hangabwärts steht, so dass der Schlitten dann beispielsweise durch seine eigene Schwerkraft unkontrolliert aus der Lastenträgeraufnahme ausfahren könnte.

Die Halterung bildet beispielsweise einen Bestandteil eines Heckstoßfängers des Kraftfahrzeuges oder ist für die Anordnung am Heckstoßfänger ausgestaltet. Es versteht sich, dass die Halterung bzw. der Antriebsschalter auch hinter einem Heckstoßfänger, d.h. beim normalen Gebrauch des Fahrzeuges unsichtbar und vor Verschmutzung geschützt, anordenbar sein kann.

In diesem Zusammenhang sei erwähnt, dass die Anordnung eines Betätigungselements - bei der Erfindung der Antriebsschalter - im Heckbereich nahe beim Schlitten auch bei einer mechanisch betätigbaren Halteeinrichtung eines Lastenträgers gemäß dem Oberbegriff des Anspruches 1 eine eigenständige Erfindung darstellt. Zwischen dem so angeordneten "mechanischen" Betätigungselement und der mechanisch betätigbaren Halteeinrichtung ist zweckmäßigerweise ein Übertragungsglied, z.B. ein Bowdenzug, angeordnet.

Bevorzugt ist es, wenn der Lastenträger einen Empfänger zur drahtlosen Ansteuerung des Antriebsschalters aufweist. Somit kann also der Antriebsschalter drahtlos angesteuert werden, z.B. mit einer Fernbedienung, die ansonsten zur Verriegelung oder zum Öffnen des Fahrzeuges (Zentralverriegelung) vorgesehen ist.

Bevorzugt hat der Empfänger einen sehr kurzen, begrenzten Empfangsbereich. Dieser kann beispielsweise nur 50 bis 200cm betragen. Bevorzugt ist der Empfänger zur Anordnung am Heck des Kraftfahrzeuges ausgestaltet bzw. vorgesehen. Der Empfänger kann auch unmittelbar am Schlitten angeordnet sein. Alle vorgenannten Maßnahmen haben den Vorteil, dass die Halteeinrichtung nur dann in die Freigabestellung verstellt werden kann, wenn sich ein Bediener in der Nähe des Schlittens befindet. Auch dies hat den Vorteil, dass der Schlitten nicht unkontrolliert aus der Lastenträgeraufnahme ausfahren kann, z.B. wenn das Fahrzeug hangabwärts steht.

Das "Fernsteuerungsprinzip" bzw. elektrische oder fluidische Antriebsprinzip für die erfindungsgemäße Halteeinrichtung ermöglicht auch eine optimale Einbindung in ein Sicherheits- und Überwachungskonzept eines jeweiligen Fahrzeuges. Auch dies ermöglicht es, dass der Lastenträger beispielsweise nicht während der Fahrt des Fahrzeuges betätigt werden kann. In der Praxis realisiert man dies bislang dadurch, dass ein Betätigungselement für eine mechanische Betätigung der Halteeinrichtung im Gepäckabteil des Kraftfahrzeuges angeordnet ist, das in der Regel beim Fahrbetrieb des Fahrzeuges nicht zugänglich ist. Der erfindungsgemäße Halteantrieb ermöglicht jedoch, dass auch an anderer Stelle, beispielsweise im Cockpit des Fahrzeuges, der Antriebsschalter oder ein Betätigungselement desselben angeordnet sein kann, ohne dass die Gefahr einer Fehlbedienung besteht.

So hat der Lastenträger beispielsweise eine Steuerung zur Aktivschaltung und/oder Deaktivierung des Halteantriebs oder auch des Haltantriebsschalters anhand mindestens einer Aktivierungsbedingung, die man im Falle der Deaktivierung auch als Deaktivierungsbedingung bezeichnen kann.

Die Steuerung kann so ausgestaltet sein, dass sie den Antriebsschalter oder den Halteantrieb anhand der mindestens einen Aktivierungsbedingung für ein Zeitintervall aktiv schaltet oder deaktiviert. Somit ist es beispielsweise nur während dieses aktiven Zeitintervalles möglich, dass ein Bediener den Antriebsschalter betätigt, der beispielsweise im Heckbereich des Fahrzeuges angeordnet ist.

Vorzugsweise umfasst die Steuerung zur Betätigung des elektrischen Antriebsschalters ein Betätigungselement mit einem in einem Außenbereich des Fahrzeugs angeordneten Bedienbereich nahe bei dem Lastenträger. Somit ist das Betätigungselement nahe beim Lastenträger bedienbar, so dass der Bediener beispielsweise gleichzeitig den Lastenträger ergreifen und den Antriebsschalter betätigen kann.

Die Steuerung umfasst weiterhin zweckmäßigerweise einen Sensoreingang und/oder einen Sensor und ist zur Auswertung eines Sensorsignals des Sensors als Aktivierungsbedingung ausgeschaltet.

Der Sensor kann beispielsweise ein Sensor einer Abstandskontrolleinrichtung (PDC / Park Distance Control) sein. Wenn also beispielsweise unmittelbar hinter dem Heck des Fahrzeuges eine Person oder ein sonstiges Hindernis steht, kann dies die Steuerung als Aktivierungsbedingung auswerten und beispielsweise ein Verstellen des Halteantriebs in Richtung der Freigabestellung verhindern. Aber auch die umgekehrte Möglichkeit ist gegeben, das beispielsweise nur dann, wenn sich eine Bedienperson "schützend" hinter dem Schlitten befindet, ein Lösen bzw. Freigeben der Halteeinrichtung möglich ist, so dass der Schlitten nur dann aus dem Heck des Fahrzeuges ausfahren kann, wenn sich dort eine Person befindet, die den Schlitten bremsen kann.

Es ist aber auch möglich, dass der Sensor einen Neigungssensor umfasst. Steht das Fahrzeug hangabwärts, so dass der Schlitten an sich mit großer Geschwindigkeit aus dem Heck ausfahren könnte, deaktiviert die Steuerung den Halteantrieb und/oder den Antriebsschalter der Gestalt, dass eine Verstellung in Richtung der Freigabestellung nicht möglich ist. Nur wenn das Fahrzeug im Wesentlichen horizontal steht, kann der Schlitten dann ausgefahren werden, weil nur dann ein Lösen der Halteeinrichtung in Richtung der Freigabestellung, d.h. ein Betätigen des Halteantriebs in Richtung der Freigabestellung, möglich ist.

Eine weitere Aktivierungsbedingung, die die Steuerung zweckmäßigerweise auswertet, ist das Unterschreiten einer Grenzgeschwindigkeit des Fahrzeuges. Wenn dieses beispielsweise mit einer Grenzgeschwindigkeit von beispielsweise maximal 5 bis 10km/h, vorzugsweise 2 bis 5km/h, rollt, darf die Halteeinrichtung betätigt werden, d.h. der Halteantrieb kann das Halteglied in die Haltestellung oder die Freigabestellung verstellen. Wenn das Fahrzeug schneller fährt, ist dies nicht möglich. Es kann aber auch vorgesehen sein, dass das Fahrzeug vollständig still stehen muss, um den Halteantrieb betätigen zu können.

Eine weitere Aktivierungsbedingung kann auch der Stillstand eines Fahrzeug-Motors des Fahrzeugs sein, so dass beispielsweise bei laufendem Motor ein Betätigen des Halteantriebes nicht möglich ist.

Weitere Aktivierungsbedingungen können sein:
- Eine Zentralverriegelung des Kraftfahrzeuges signalisiert "Fahrzeugtüren entriegelt"
- Schlüssel ist aus dem Zündschloss des Kraftfahrzeuges entfernt
- Motor ist aus, beispielsweise Klemme 15 aus,
- Klemme 15 ein, Kraftfahrzeug ist betriebsbereit
- oder eine sonstige Stellung des Motorstartschalters.

Eine vorteilhafte Ausgestaltung der Erfindung sieht vor, dass die mindestens eine Aktivierungsbedingung ein von einem Freigabeschalter sendbares Freigabesignal ist oder umfasst. Der Freigabeschalter ist beispielsweise im Innenraum des Fahrzeugs, beispielsweise im Cockpit desselben, im Gepäckabteil, vorzugsweise geschützt durch einen Deckel, oder an anderer Stelle des Fahrzeuges angeordnet. Der Freigabeschalter kann aber auch einen an einem Fahrzeugschlüssel für das Fahrzeug oder an einem am Schlüsselanhängergehäuse angeordneten Sender umfassen und der Lastenträger einen zugeordneten Funkempfänger zum Empfang des Freigabesignals.

Somit kann beispielsweise durch Betätigung des Freigabeschalters im Schlüssel das Zeitintervall durch den Bediener des Fahrzeuges gegeben werden, worauf dann das Zeitintervall zur Betätigung des Antriebsschalters beginnt. Der Sender ist beispielsweise in einem Fahrzeugschlüsselgehäuse, insbesondere dessen Griff, angeordnet.

Die mindestens eine Aktivierungsbedingung kann auch eine Funktionsstellung eines Motorschalters zum Starten eines Fahrzeug-Motors des Fahrzeugs umfassen. Die Funktionsstellung ist beispielsweise eine Betriebsbereitschaft des Fahrzeuges, zum Beispiel ein Signal "Klemme 15 ein". Das Signal kann beispielsweise das geschaltete Plus am Zündstartschalter sein ("Klemme 15") oder auch die sogenannte Zündschloss-Radiostellung ("Klemme 15r").

Es ist aber auch der gerade umgekehrte Fall möglich, dass nämlich die mindestens eine Aktivierungsbedingung eine Funktionsstellung "Motor aus", zum Beispiel "Klemme 15", des Motorstartschalters umfasst. Somit ist also eine der Aktivierungsbedingungen jedenfalls so getroffen, dass zu der Aktivierung des Antriebsschalters und/oder zum Auslösen des Zeitintervalls der Motor ausgeschaltet wird oder ist. Die Aktivierungsbedingung kann beispielsweise auch ein Zustandswechsel "Motor ein - Motor aus" sein, so dass beispielsweise nach Abstellen des Fahrzeuges die Halteeinrichtung betätigbar ist, z.B. in die Freigabestellung verstellbar ist und/oder das Zeitintervall zum Betätigen Lösen der Halteeinrichtung beginnt und der Bediener den Schlitten des Lastenträgers beispielsweise nach Betätigen des Antriebsschalters und Entriegeln der Halteeinrichtung verstellen kann. Ein Zeitintervall, innerhalb dessen die Halteeinrichtung betätigbar ist, ist in dieser Situation vorzugsweise so bemessen, dass der Bediener zwar bequem zum Heck des Fahrzeuges gehen und dort den Lastenträger in die Ruhestellung oder die Gebrauchsstellung verstellen kann. Dann endet das Zeitintervall jedoch, so dass eine Fehlmanipulation des Lastenträgers verhindert wird.

Die mindestens eine Aktivierungsbedingung kann auch eine Bestromung einer Leuchte des Fahrzeugs, insbesondere einer am Heck des Fahrzeugs angeordneten Leuchte, und/oder eine am Lastenträger angeordnete Leuchte umfassen. Die Heckleuchte ist beispielsweise eine Nebelschlussleuchte, ein Rückfahrscheinwerfer, eine Blinkleuchte des Fahrzeugs oder des Lastenträgers oder dergleichen. Wenn die erfindungsgemäße Steuerung auf der Basis des Heckleuchtensignals arbeitet, sind nur kurze Kabelwege erforderlich, was z.B. kostengünstig ist.

Eine Variante der Erfindung kann vorsehen, dass die Leuchte eine Leuchte des Lastenträgers ist, deren Bestromung eine Aktivierungsbedingung für die erfindungsgemäße Steuerung bildet. So könnte die Steuerung beispielsweise mit einer Stromversorgungsleitung für mindestens eine dieser lastenträgerseitigen Leuchten verbunden sein, beispielsweise mit der zum Lastenträger führenden Versorgungsleitung. Diese Variante ist aufgrund einer kurzen Leitungsführung vorteilhaft.

Besonders bevorzugt ist jedoch, dass die Steuerung zur Ermittlung einer Bestromung der Leuchte mit einem Bordnetz des Fahrzeugs, zum Beispiel mit einer zur jeweiligen Leuchte führenden Stromversorgungsleitung, verbunden ist. Es ist aber auch möglich, dass die Steuerung mit einem Bus des Bordnetzes verbunden ist, über das die Leuchte aktiviert wird. Das Bordnetz des Fahrzeugs ist von außen nicht manipulierbar, was die Diebstahlsicherheit verbessert. Kontakte der Anhänger-Steckdose sind nämlich prinzipiell von außen her zugänglich und dementsprechend manipulierbar.

Die mindestens eine Aktivierungsbedingung bildet zweckmäßigerweise einen Bestandteil einer Aktivierungsbedingungsgruppe, die die Steuerung zur Aktivschaltung des Antriebsschalters für das Zeitintervall prüft, wobei die Aktivierungsbedingungsgruppe mindestens zwei Aktivierungsbedingungen aufweist, welche die Steuerung für eine Aktivierung des Antriebsschalters prüft. Somit ist eine Aktivierung des Antriebsschalters bei einem Einfachfehler, beispielsweise einem Kurzschluss, einer Störung an einem Schalter, durch eine Manipulation von außen oder dergleichen, unproblematisch, weil mindestens eine zweite Aktivierungsbedingung hinzutreten muss, bevor die Steuerung den Antriebsschalter aktiv schaltet beziehungsweise für ein Auslösen des Halteantriebs freigibt.

Die Aktivierungsbedingungsgruppe umfasst zweckmäßigerweise mindestens zwei der vorgenannten Aktivierungsbedingungen.

Besonders vorteilhafte Varianten von Aktivierungsbedingungsgruppen werden nachfolgend vorgestellt:
Eine besonders bevorzugte Aktivierungsbedingungsgruppe umfasst beispielsweise die beiden folgenden Aktivierungsbedingungen: Motorstartschalter zum Starten eines Fahrzeug-Motors des Fahrzeugs in Funktionsstellung "Motor aus" und/oder "Schlüssel aus einem Zündschloss des Fahrzeugs entfernt". An dieser Bedingung erkennt die Steuerung, dass das Fahrzeug außer Betrieb ist. Eine andere Bedingung wäre, dass der Motor des Fahrzeuges nicht läuft. Allerdings ist das Signal "Klemme 15" im Bereich des Fahrzeug-Hecks z.B. wegen einer Anhänger-Steckdose beziehungsweise einer Anhängekupplung häufig ohnehin vorhanden, so dass die Stellung des Motorstartschalters eine bevorzugte, einfach realisierbare Bedingung ist. Die weitere Bedingung der Aktivierungsbedingungsgruppe ist dann:
   - mindestens eine, vorzugsweise mindestens zwei Blinkleuchten des Fahrzeugs eingeschaltet beziehungsweise mit wechselnder Bestromung.

Nach dem Abstellen des Fahrzeuges ist das Signal "Klemme 15" in der Regel "AUS" beziehungsweise wird der Zündschlüssel aus dem Zündschloss entfernt.

In einem nächsten Schritt wird das Fahrzeug verriegelt oder entriegelt, wobei bei aktuellen Fahrzeugen die Blinker des Fahrzeuges zumindest einmal aufleuchten. Die Bedienung erfolgt beispielsweise über die Funkfernbedienung, deren Sender zweckmäßigerweise in einem Gehäuse des Fahrzeugschlüssels angeordnet ist. Die Sicherheit bei diesem Konzept ist hoch, da zum einen die Startbedingung "Klemme 15 aus" und zum anderen mindestens ein Heckleuchtensignal, vorzugsweise zwei Heckleuchtensignale (der beiden heckseitigen Blinkleuchten), von der erfindungsgemäßen Steuerung ausgewertet werden. Die Signale der heckseitigen Blinkerleuchten sind im Heckbereich mit kurzen Leitungswegen für die erfindungsgemäße Steuerung verfügbar. Eine Auslösung während der Fahrt des Fahrzeuges ist nicht möglich. Eine Sabotage ist kaum möglich. Zudem sind die Kosten dieser Variante gering. Die Bedienung ist komfortabel.

Es versteht sich, dass das Sicherheitskonzept der Aktivierungsbedingungsgruppe auch mit anderen kombinierten Aktivierungsbedingungen realisierbar ist, beispielsweise:
- Nebenschlussleuchte und/oder Rückfahrscheinwerfer eingeschaltet und
- Motorschalter zum Starten eines Fahrzeug-Motors des Fahrzeugs in Betriebsbereitschaft, beispielsweise Signal "Klemme 15 ein", "Schlüssel ins Zündschloss gesteckt" oder dergleichen.

Es versteht sich, dass zu den beiden vorgenannten Aktivierungsbedingungsgruppen auch weitere Aktivierungsbedingungen hinzutreten können, was die Sicherheit des erfindungsgemäßen Konzeptes erhöht.

Nachfolgend werden weitere Aktivierungsbedingungen erörtert, die vorteilhaft sind.

Mindestens eine Aktivierungsbedingung kann beispielsweise auch umfassen, dass der Antriebsschalter vor Beginn der Aktivierung unbetätigt ist. Wenn also ein Bediener beispielsweise den Antriebsschalter bereits drückt, bevor das Zeitintervall an sich beginnen würde, aktiviert die Steuerung den Antriebsschalter nicht. Bei gedrücktem Antriebsschalter erfolgt also keine Aktivierung.

Eine weitere Sicherheitsmaßnahme ist es, wenn die Steuerung ein Starten des Halteantriebs nur dann zulässt, wenn der Antriebsschalter nach Beginn des Zeitintervalls von einer unbetätigten Stellung in eine Betätigungsstellung betätigt wird. Die Steuerung prüft also eine Signalflanke "Aus-Ein".

Der Halteantrieb ist vorteilhaft nur während einer Betätigung des Antriebsschalters in Betrieb. Wenn der Bediener den Antriebsschalter loslässt, schaltet auch der Halteantrieb ab. Dadurch wird sichergestellt, dass der Halteantrieb nicht ohne Bedieneraufsicht läuft.

Es versteht sich, dass bei einer Ausgestaltung der Erfindung der Antriebsschalter nur einen Startimpuls für den Halteantrieb gibt und dieser dann so lange läuft, bis Freigabestellung oder die Haltestellung der Halteeinrichtung erreicht ist.

Ferner kann z.B. bei der Steuerung eine Begrenzungseinrichtung vorgesehen sein, die eine Aktivierung, z.B. Bestromung, des Halteantriebs zeitlich auf eine zum Erreichen der Haltestellung oder der Freigabestellung nötige Dauer begrenzt. Dadurch wird z.B. eine Überhitzung oder ein unnötiger Energieverbrauch vermieden.

Die Steuerung kann so ausgestaltet sein, dass sie das Zeitintervall während einer Bestromung des Halteantriebs und/oder während einer Betätigung des Antriebsschalters verlängert. Somit wird verhindert, dass der Halteantrieb abschaltet, bevor die Haltestellung oder die Freigabestellung erreicht ist. Andererseits braucht das Zeitintervall nicht unnötig lange zu sein, da lediglich der Start des Halteantriebs innerhalb des Zeitintervalls erfolgen muss.

Die Steuerung umfasst zweckmäßigerweise mindestens einen Signalausgang zur Ansteuerung einer optischen und/oder akustischen Funktionsanzeigeeinrichtung des Fahrzeugs oder des Lastenträgers. Die Funktionsanzeigeeinrichtung kann aber auch ein integraler Bestandteil der Steuerung sein, beispielsweise auf einer Steuerungsplatine oder im Gehäuse der Steuerung angeordnet sein. Die Funktionsanzeigeeinrichtung ist zweckmäßigerweise im Bereich des Lastenträgers angeordnet, das heißt im Bedienbereich zum Verstellen des Schlittens zwischen der Gebrauchsstellung und der Ruhestellung. Ferner kann die Funktionsanzeigeeinrichtung auch in einem Display des Fahrzeugs vorgesehen sein, beispielsweise im Cockpit desselben.

Die Steuerung signalisiert beispielsweise eine Aktivierung des Antriebsschalters über die mindestens eine Funktionsanzeigeeinrichtung. Ferner kann die Steuerung beispielsweise auch eine Störung der Halteeinrichtung oder eine Fehlbedienung mittels der Funktionsanzeigeeinrichtung anzeigen, beispielsweise wenn der Antriebsschalter bereits vor Beginn des Zeitintervalls gedrückt war.

Ein weiteres Sicherheitsmerkmal kann ein Doppel-Betätigungskonzept sein: Der Antriebsschalter kann nur dann wirksam betätigt werden, wenn ein zusätzlicher Freigabeschalter oder Sicherheitsschalter gleichzeitig oder in kurzer Zeit vorher bedient worden ist. Nur wenn also beide Schalter (Antriebsschalter und Sicherheitsschalter) gleichzeitig oder fast gleichzeitig betätigt werden, ist ein Verfahren des Halteantriebs von der Haltein die Freigabestellung oder umgekehrt möglich.

Nachfolgend werden Ausführungsbeispiele der Erfindung anhand der Zeichnung dargestellt. Es zeigen:
- Figur 1: eine schematische Schrägansicht eines Lastenträgers in Gebrauchsstellung, der in ein Heck eines in
- Figur 2: von hinten schematisch dargestellten Kraftfahrzeuges einfahrbar und aus diesem ausfahrbar ist,
- Figur 3: eine teilweise schematische Querschnittsansicht des Lastenträgers gemäß Figur 1 mit einer Halteeinrichtung gemäß einer ersten Ausführungsform,
- Figur 4: eine Anordnung ähnlich wie Figur 3, jedoch mit einer Halteeinrichtung in einer zweiten Ausführungsform,

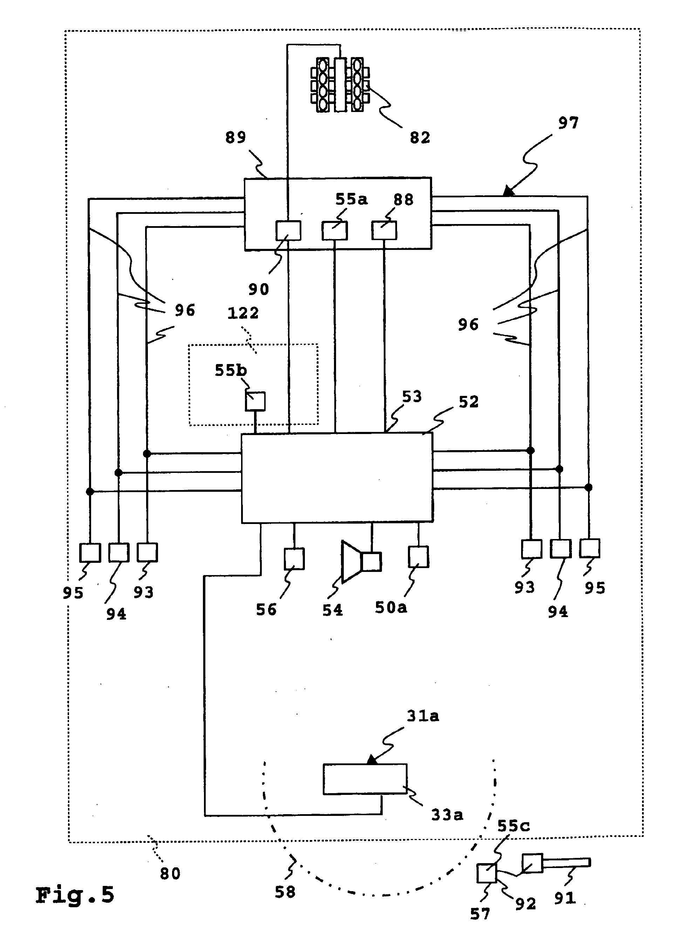

- Figur 5: einen schematischen Schaltplan des Kraftfahrzeuges gemäß Figur 2 sowie einer Steuerung der Halteeinrichtung gemäß Figur 3 oder Figur 4,
- Figur 6: eine perspektivische Schrägansicht einer Klemmeinrichtung, mit der ein bewegliches Bauteil, beispielsweise ein Schlitten, eines Lastenträgers relativ zur Tragbasis, beispielsweise einer Schlitten-Führungsbasis, verklemmt oder verspannt werden kann,
- Figur 7: eine perspektivische Schrägansicht eines Klemm- oder Spannelementes der Halteeinrichtung gemäß Figur 6
- Figur 8: eine perspektivische Frontalansicht der Anordnung gemäß Figur 6,
- Figur 9: eine Variante der Anordnung gemäß Figuren 6-8, wobei die Halteeinrichtung einen Riegel umfasst, der zugleich eine Klemmfunktion hat,
- Figur 10: die Anordnung von Figur 9 jedoch von einer entriegelten in eine verriegelte oder geklemmte Stellung verstellt.
- Figur 11: eine Variante der Halteeinrichtung gemäß Figuren 9, 10 mit einem Spannelement und einer Feder, die zwischen einem Spannelement und einem in Klemmstellung befindlichen Halteglied angeordnet ist und
- Figur 12: die Anordnung gemäß Figur 11, jedoch mit gelöster Verspannung des Halteglieds, wobei das Halteglied allerdings noch in einer Verriegelungsstellung ist.

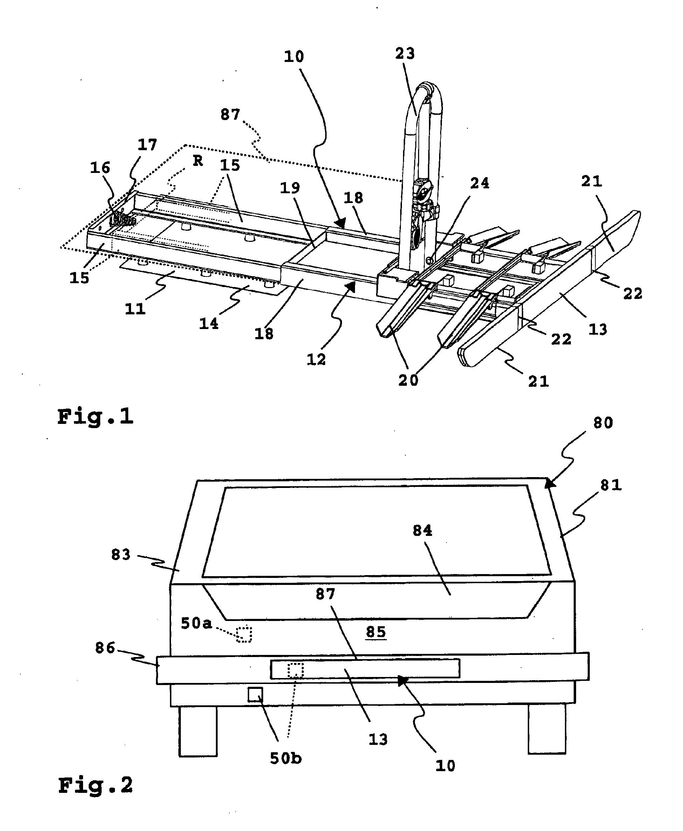

Ein Fahrzeug 80, z.B. ein PKW, hat eine Karosserie 81 und ist durch einen Antriebsmotor 82, beispielsweise einen Elektro- oder Verbrennungsmotor, antreibbar. An einem Heck 83 der Karosserie 81 befindet sich unter einem Deckel 84 ein Gepäckabteil 85 sowie ein Heckstoßfänger 86. Das Fahrzeug 80 ist beispielsweise ein Personenkraftwagen. Im Bereich des Heckstoßfängers 86 ist weiterhin eine Lastenträgeraufnahme 87 für einen Lastenträger 10, der in Figur 1 detaillierter dargestellt ist, vorgesehen. Die Lastenträgeraufnahme 87 ist eine Art Tasche oder Ausnehmung, in der eine Schlitten-Führungsbasis 11 des Lastenträgers 10, angeordnet ist. An der Schlitten-Führungsbasis 11 ist ein Schlitten 12 längsverschieblich geführt, so dass er zwischen einer Gebrauchsstellung G (ausgezogen dargestellt) in der er vor das Heck 83 des Fahrzeugs 80 vorsteht und mit einer Last beladbar ist, und einer Ruhestellung R (gestrichelt angedeutet) verstellbar ist, wobei der Schlitten 12 in der Ruhestellung R in einem Innenraum bzw. in der Lastenträgeraufnahme 87 aufgenommen ist, so dass er nicht vor das Heck 83 vorsteht.

In der Ruhestellung R fluchtet ein Kennzeichenträger 13 des Schlittens 12 etwa mit dem Heckstoßfänger 86, so dass er quasi einen Bestandteil desselben bildet.

Die Schlitten-Führungsbasis 11 weist vorliegend eine Halteplatte 14 auf, an deren Oberseite Führungsschienen 15 angeordnet sind, die zueinander parallel sind. Die Führungsschienen 15 sind auf nicht näher bezeichneten Stützen angeordnet, könnten aber auch unmittelbar auf der Halteplatte 14 befestigt sein. Es versteht sich, dass die Halteplatte 14 nur beispielhaft für sonstige Befestigungseinrichtung steht, mit denen die Führungsschienen 15 am Fahrzeug 80 befestigbar sind. Ein etwa am Boden bzw. in Fahrtrichtung des Fahrzeugs 80 vorn gelegener Endbereich der Führungsschienen 15 ist durch einen Querträger 16 verbunden, so dass insgesamt durch die Führungsschienen 15 und den Querträger 16 eine U-förmige Anordnung getroffen ist. Vor dem Querträger 16 steht eine Auswurf-Feder 17 in Richtung des Schlittens 12 vor, die den Schlitten 12 in seiner Ruhestellung R in Richtung der Gebrauchsstellung G beaufschlagt.

Der Schlitten 12 hat eine in Draufsicht im Wesentlichen rechteckige Gestalt. Dabei werden zwei Längsseiten dieses Rechteckes von Läuferschienen 18 gebildet, die an den Führungsschienen 15 geführt und längsverschieblich sind. Die Läuferschienen 18 sind auf der dem Querträger 16 zugewandten Seite durch einen Querträger 19 miteinander verbunden, auf den die Auswurf-Feder 17 in der Ruhestellung R wirkt. Am heckseitigen Ende des Schlittens 12, d.h. entgegengesetzt zum Querträger 19, befindet sich der Kennzeichenträger 13, der die Läuferschienen 18 miteinander verbindet.

Der Schlitten 12 bildet eine Tragbasis zum Auflegen von Lasten, beim Ausführungsbeispiel Fahrrädern. Diese sind auf Trägerrinnen 20 aufstellbar, die schwenkbeweglich an den Läuferschienen 18 gelagert sind. Die Trägerrinnen 20 können zwischen die Läuferschienen 18 in eine Nichtgebrauchsstellung geschwenkt werden, in der der Schlitten 12 in Richtung der Schlitten-Führungsbasis 11, d.h. in die Ruhestellung R, verstellbar ist. Zu diesem Zweck werden auch Leuchten 21, die beispielsweise Bremslichter, Blinker, Rückfahrscheinwerfer und dergleichen umfassen, in Richtung der Läuferschienen 18 geschwenkt, wofür Schwenklager 22 zwischen dem Kennzeichenträger 13 und den Leuchten 21 vorgesehen sind.

Weiterhin ist es möglich, zum Verstellen des Schlittens 12 in die Ruhestellung R einen Träger 23, beispielsweise in Gestalt eines U-Bügels, in den Zwischenraum zwischen die Läuferschienen 18 zu schwenken, wofür Schwenklager 24 vorgesehen sind. Dann ist also auch der Träger 23 platzsparend untergebracht, so dass der Schlitten 12 in die Lastenträgeraufnahme 87 passt.

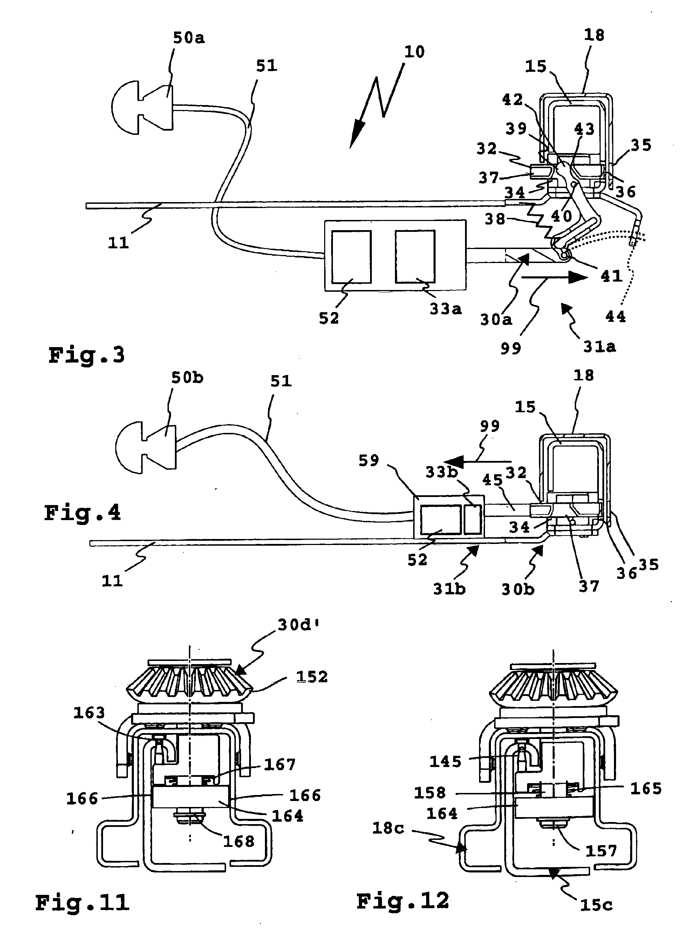

Zum Halten des Schlittens 12 in der Gebrauchsstellung G und/oder der Ruhestellung R, sind beispielhaft in den Figuren 3 und 4 dargestellte Halteeinrichtungen 30a, 30b vorgesehen. Die Halteeinrichtungen 30a, 30b sind vorliegend als Verriegelungseinrichtung 31a, 31b ausgestaltet und haben Riegel 32, die durch Halteantriebe 33a, 33b betätigbar sind. Die Riegel 32 sind an Lagern 34 schiebebeweglich zwischen einer Haltestellung oder Verriegelungsstellung, in der sie in Halteaufnahmen 35 des Schlittens 12 eingreifen, und einer Freigabestellung (in Figuren 3 und 4 dargestellt) verstellbar, in der die Riegel 32 außer Eingriff mit den Halteaufnahmen 35 sind, so dass der Schlitten 12 bezüglich der Schlitten-Führungsbasis 11 längsverschieblich ist, z.B. zum Verstauen in der Lastenträgeraufnahme 87.

Die Riegel 32 sind quer zur Auszugsrichtung bzw. Laufrichtung des Schlittens 12 bezüglich der Schlitten-Führungsbasis 11 angeordnet und vorliegend als eine Art Stift ausgestaltet.

Die Führungsschienen 15 und die Läuferschienen 18 haben vorliegend eine U-förmige Ausgestaltung, wobei andere Geometrien selbstverständlich ohne Weiteres möglich sind. Beispielsweise befindet sich das Lager 34 unterhalb der Führungsschienen 15, in der Zeichnung beispielsweise der in Fahrtrichtung rechten Führungsschiene 15, und ist so positioniert, dass der Riegel 32 in einen Seitenschenkel der Läuferschiene 18 in der Verriegelungsstellung bzw. Haltestellung eingreift. Wenn der Riegel 32 hingegen in die Lösestellung verstellt ist (Figuren 3, 4) steht er beispielsweise seitlich vor die Läuferschiene 18 vor.

Einen optimalen Halt erzielt man vorliegend dadurch, dass das Lager 34 nicht nur unterhalb der Führungsschiene 15, sondern innerhalb derselben, d.h. in deren Innenraum, angeordnet ist. Somit greift der Riegel 32 in der Verriegelungsstellung oder Haltestellung nicht nur in die Halteaufnahme 35 ein, sondern durchgreift auch eine in der Ruhestellung R oder der Gebrauchsstellung G mit der Halteaufnahme 35 fluchtende Halteaufnahme 36 an der Führungsschiene 15 ein. Dadurch sind die Schienen 15, 18 gegeneinander in Auszugsrichtung des Schlittens 12 bezüglich der Schlitten-Führungsbasis 11 verriegelt.

Die Riegel 32 bilden Halteglieder zum ortsfesten Halten des Schlittens 12 bezüglich der Schlitten-Führungsbasis 11 bzw. des Fahrzeuges 80.

Es versteht sich, dass nicht nur an einem Paar Schienen 15, 18, sondern auch an beiden, zueinander parallelen Schienenpaaren 15, 18 Halteeinrichtungen 30a oder 30b vorgesehen sein können. Weiterhin ist es möglich, dass auch in Auszugsrichtung des Schlittens 12 mehrere Halteeinrichtungen in der Art der Halteeinrichtungen 30a, 30b hintereinander angeordnet sind.

Der Riegel 32 wird durch eine Feder 38 in seine Verriegelungsstellung oder Haltestellung belastet. Die Feder 38 ist einerseits an der Schlitten-Führungsbasis 11 und andererseits an einem Betätigungshebel 39 befestigt, der den Riegel 32 betätigt. Der Betätigungshebel 39 ist schwenkbeweglich an einem Schwenklager 40 gelagert. Die Feder 38 sowie der Halteantrieb 33a greifen an einem Betätigungsende 41 des vorliegend winkeligen Betätigungshebels 39 an. Der Betätigungshebel 39 hat neben dem Betätigungsende 41 ein Wirkende 42, das in eine Aufnahme 43 des Riegels 32 eingreift. Das Wirkende 42 und das Betätigungsende 41 sind an einander entgegengesetzten Seiten bezüglich des Schwenklagers 40 angeordnet. Wird der Betätigungshebel 39 um das Schwenklager 40 geschwenkt, nimmt er den Riegel 32 in die Verriegelungsstellung oder die Entriegelungsstellung bzw. Freigabestellung mit.

Während ein Abtrieb 45 des Halteantriebs 33a am Betätigungsende 41 des Betätigungshebels 39 angreift, dort zweckmäßigerweise schwenkbeweglich gelagert ist, und nur in Richtung einer Verstellung des Riegels 32 in die Freigabestellung wirksam ist (in Gegenrichtung wirkt die Feder 38), betätigt ein Abtrieb 45 des Halteantriebs 33b den Riegel 32 sowohl in die Haltestellung oder Verriegelungsstellung als auch in die Freigabestellung, die in Figur 4 dargestellt ist.

Die Halteantriebe 33a, 33b sind aufgrund des erfindungsgemäßen, innovativen Konzeptes bequem betätigbar. Die Halteantriebe 33a, 33b lassen sich durch Antriebsschalter 50a, 50b bequem betätigen. Die Antriebsschalter 50a, 50b lassen sich frei am Fahrzeug 80 positionieren, beispielsweise am Heck 83. Die Antriebsschalter 50a, 50b sind vorliegend elektrische Schalter, die über Leitungen 51 mit einer Steuerung 52 verbunden sind, die ihrerseits wiederum die Halteantriebe 33a, 33b ansteuert. Beispielsweise ist der Antriebsschalter 50a im Gepäckabteil 85 angeordnet. Der Antriebsschalter 50b hingegen ist unmittelbar in der Nähe des Lastenträgers 10, d.h. am Heck 83 in einem Außenbereich des Fahrzeuges 80 positioniert. Der Antriebsschalter 50b befindet sich in der Darstellung gemäß Figur 2 beispielsweise unterhalb des Heckstoßfängers 86, d.h. in einem gegen Sicht abgedeckten Bereich. Eine bevorzugte Anordnung des Antriebsschalters 50b sieht vor, dass dieser hinter dem Kennzeichenträger 13 angeordnet ist oder am Kennzeichenträger 13 angeordnet ist, d.h. unmittelbar am Schlitten 12. Wenn nunmehr ein Bediener den Antriebsschalter 50b betätigt, ist er direkt in der Nähe des Schlittens 12, so dass dieser nicht unbeaufsichtigt aus dem Heck 83 des Fahrzeuges 80 ausfahren kann, beispielsweise wenn das Heck hangabwärts steht.

Die Steuerung 52 kontrolliert zweckmäßigerweise Aktivierungsbedingungen, die ein Ansteuern des Halteantriebs 33a, 33b mit den Antriebsschaltern 50a oder 50b ermöglichen, mithin also ein Endriegeln oder Lösen des Schlittens 12 bezüglich der Schlitten-Führungsbasis 11 oder des Fahrzeugs 80. Weiterhin ermöglicht die Steuerung 52 eine Funktionsanzeige der Halteeinrichtungen 30a, 30b, so dass eine Bedienperson jederzeit über deren Zustand, beispielsweise Fehlerzustand oder Funktionszustand, Kenntnis haben kann:

Beispielsweise ist eine akustische Funktionsanzeige vorteilhaft. So kann die Steuerung 52 beispielsweise eine akustische Funktionsanzeigeeinrichtung 54 umfassen, zum Beispiel einen Lautsprecher, der bei einem Fahrbetrieb des Halteantriebs 33a, 33b ein Funktionsgeräusch, beispielsweise eine pulsierende Tonfrequenz, ausgibt. Ist die Verriegelung erfolgreich verlaufen, quittiert dies die Funktionsanzeigeeinrichtung 54 mit einem Dauerton für eine vorbestimmte Zeit. Es versteht sich, dass die Steuerung 52 auch einen Lautsprecher des Fahrzeugs 80 vorteilhaft ansteuern kann (nicht dargestellt), z.B. einen Lautsprecher eines Audiosystems.

Die Steuerung 52 enthält vorteilhaft einen Signalausgang 53 zur Ansteuerung einer Funktionsanzeigeeinrichtung 88 des Fahrzeugs 80. Der Signalausgang 53 ist beispielsweise ein Bestandteil einer Busschnittstelle der Steuerung 52. Die Funktionsanzeigeeinrichtung 88 ist beispielsweise ein Display in einem Cockpit 89 des Fahrzeugs 80.

Es versteht sich, dass auch nur eine der Funktionsanzeigeeinrichtung 54 und/oder der Signalausgang 53 vorgesehen sein können. Die Funktionsanzeigeeinrichtung 54 und der Signalausgang 53 sind vorteilhafte Optionen.

Die Steuerung 52 schaltet nämlich den Halteantrieb 33a, 33b und/oder den Antriebsschalter 50a und/oder 50b nicht dauerhaft aktiv, sondern nur für ein vorbestimmtes Zeitintervall anhand mindestens einer Auslösebedingung.

Diese Auslösebedingung kann beispielsweise ein von einem Freigabeschalter sendbares Freigabesignal sein. Beispielsweise ist im Cockpit 89 ein Freigabeschalter 55a und/oder im Gepäckabteil 85 des Fahrzeugs 80 ein Freigabeschalter 55b angeordnet. Der Bediener kann beispielsweise somit im Innenraum des Fahrzeugs 80 einen der Freigabeschalter 55a, 55b betätigen, worauf die Steuerung 52 für ein Zeitintervall, beispielsweise 15-30 Sekunden, den Antriebsschalter 50a aktiv schaltet, d.h. einen Betrieb des Halteantriebs 33a, 33b zulässt. Der Bediener hat dann bequem Zeit, zum Schlitten 12 zu gehen und dort die Verriegelungseinrichtung 31a, 31b zu entriegeln.

Ein weiteres, innovatives Freigabekonzept ist in der Art des Keyless-Go ausgestaltet. Die Steuerung 52 umfasst einen zweckmäßigerweise am Heck 83, beispielsweise am Schlitten 12, angeordneten Funkempfänger 56 zum Empfang eines Freigabesignals, das mit einem hierfür vorgesehenen Freigabesender 57, der somit einen Freigabeschalter 55c darstellt, sendbar ist. Der Freigabesender 57 ist beispielsweise in einem Schlüsselanhängergehäuse 92 angeordnet. Er könnte auch beispielsweise in oder an einem Fahrzeugschlüssel 91 angeordnet sein. Der Funkempfänger 56 hat einen eng begrenzten Empfangsbereich 58, so dass nur dann, wenn der Freigabesender 57 im Empfangsbereich 58 des Funkempfängers 56 ist, der Antriebsschalter 50a freigeschaltet ist.

Es versteht sich, dass eine Freigabe zum Schalten der Verriegelungseinrichtung 31a, 31b in ihre Verriegelungsstellung oder ihre Entriegelungsstellung anhand eines der Freigabeschalter 55a-55c auch zeitlich unlimitiert, das heißt ohne das vorgenannte Zeitintervall, erfolgen kann. So kann der Antriebsschalter 50a beispielsweise immer dann aktiv geschaltet sein, wenn der Freigabesender 57 vom Funkempfänger 56 im Empfangsbereich 58 erkannt wird.

Nachfolgend werden verschiedene Szenarien vorgestellt, bei denen jeweils für ein Zeitintervall einer oder mehrere der Antriebsschalter 50a, 50b der Steuerung 52 aktiv geschaltet werden und nach Ablauf des Zeitintervalls wieder inaktiv.

Beispielsweise wertet die Steuerung 52 eine Funktionsstellung eines Motorstartschalters 90 aus und/oder ob der Fahrzeugschlüssel 91 in den Motorstartschalter 90 gesteckt ist. So kann beispielsweise vorgesehen sein, dass die Steuerung 52 nach einem Ausschalten des Antriebsmotors 82 des Fahrzeugs 80 das Zeitintervall startet. Auch ein Entfernen des Fahrzeugschlüssels 91 aus einem Zündschloss oder aus dem Motorstartschalter 90 kann für die Steuerung 52 eine Auslösebedingung zum Starten des Zeitintervalls sein.

Auch das Bestromen einer Leuchte des Fahrzeugs 80 oder der Lastenträgers 10, vorzugsweise einer Heckleuchte, kann eine Startbedingung für das Starten des Zeitintervalls zur Aktivschaltung eines Antriebsschalters 50a und/oder 50b sein. Vorzugsweise wertet die Steuerung 52 dazu Signale beziehungsweise Bestromungen von Heckleuchten, beispielsweise einer Nebelschlussleuchte 93 und/oder eines Rückfahrscheinwerfers 94 und/oder von Blinkleuchten 95 und/oder der Leuchten 21 aus. Die Steuerung 52 ist zur Überprüfung einer Bestromung der Leuchten 21 und/oder 93-95 mit Stromversorgungsleitungen 96 eines Bordnetzes 97 des Fahrzeugs 80 verbunden. Aufgrund der Anbindung an Stromversorgungsleitungen 96 für Heckleuchten sind dabei die Leitungswege kurz. Wenn nun der Bediener des Fahrzeugs 80 beispielsweise einen Rückwärtsgang einlegt, werden die Rückfahrscheinwerfer 94 aktiviert und die Steuerung 52 startet infolgedessen das Zeitintervall. Dazu kommt vorzugsweise eine zweite Auslösebedingung, die die Steuerung prüft, beispielsweise "Klemme 15 eingeschaltet", in der Regel die zweite Rastung des Motorstartschalters 90.

Eine weitere Variante kann vorsehen, dass beispielsweise beim Aktivieren der Nebelschlussleuchte 93 das Zeitintervall oder Zeitfenster zur Aktivierung des Antriebsschalters 50a, 50b von der Steuerung 52 geöffnet beziehungsweise gestartet wird. Auch hier wird zusätzlich zur Auslösebedingung "Nebelschlussleuchte an" vorzugsweise eine zusätzliche Auslösebedingung von der Steuerung 52 ausgewertet, das heißt also eine Auslösebedingungsgruppe. Diese zweite Auslösebedingung kann beispielsweise ebenfalls heißen, dass der Motorstartschalter 90 aktiv geschaltet ist ("Klemme 15 ein").

Durch die zusätzliche Auswertung der Stellung des Motorstartschalters 90 ist eine Maßnahme gegen Fehlbedienung oder Manipulation realisiert.

Es versteht sich, dass die Steuerung 52 bei beiden Szenarien zweckmäßigerweise überprüft, ob der Antriebsmotor 82 ausgeschaltet ist. Mithin ist es also bei laufendem Motor des Fahrzeugs 80 nicht möglich, den Schlitten 12 zu entriegeln und z.B. aus dem Heck 83 auszuziehen.

Ein weiteres, besonders bevorzugtes Szenario sieht vor, dass die Steuerung 52 das Zeitintervall zur Aktivierung der Antriebsschalter 50a, 50b nach dem Abstellen des Fahrzeugs 80 beziehungsweise Deaktivieren desselben startet. Die Auslösebedingungsgruppe umfasst hier die Auslösebedingung, dass der Motorstartschalter 90 ausgeschaltet ist (in der Regel "Klemme 15 aus") und zudem mindestens eine, zweckmäßigerweise beide Blinkleuchten 95 bestromt werden. Hier macht man sich zunutze, dass ein Fahrzeug nach dem Abstellen in der Regel verschlossen wird, wobei Fahrzeuge in der Regel zur Quittierung eines korrekten Verschließvorganges die Blinkleuchten für eine Leuchtsequenz aktivieren, die mindestens ein Aufleuchten der Blinkleuchten umfasst. Wenn also der Motorstartschalter 90 in Stellung "Aus" geschaltet wird und zudem eine oder beide Blinkleuchten 95 mindestens einmal bestromt werden, öffnet die Steuerung 52 das Zeitfenster zur Aktivierung des Antriebsschalters 50a und/oder 50b. Nur dann ist beispielsweise der von außen zugängliche beziehungsweise betätigbare Antriebsschalter 50a freigeschaltet, so dass Fehlbedienungen oder Manipulationen nicht möglich sind. Durch die Abtastung/Ermittlung der Bestromung zweier Blinkleuchten ist eine hohe Fehlbedienungssicherheit oder Sicherheit gegen Fehlauswertung gegeben.

Zweckmäßigerweise ist vorgesehen, dass die Steuerung 52 eine Aktivschaltung des Antriebsschalters 50a und/oder 50b für das Zeitintervall oder Zeitfenster optisch und/oder akustisch signalisiert, beispielsweise über die Cockpit-Funktionsanzeigeeinrichtung 88, wo im Klartext angezeigt werden kann: "Schlitten verstellbar", und/oder an den extern angeordneten Funktionsanzeigeeinrichtung 54. Diese können beispielsweise blinken, eine vorbestimmte Farbe anzeigen oder dergleichen, um die Betriebsbereitschaft beziehungsweise Entriegelungs- oder Verriegelungsbereitschaft zu signalisieren.

Eine weitere Sicherheitsmaßnahme gegen Fehlbedienung kann vorteilhaft vorsehen, dass die Steuerung 52 nur dann ein Starten des Antriebsschalters 50a oder ein Starten des Halteantriebs 33a, 33b zulässt, wenn der Antriebsschalter 50a nach Beginn des Zeitintervalls von einer unbetätigten Stellung in eine Betätigungsstellung betätigt wird. Wenn also bereits vor Beginn des Zeitintervalls beispielsweise durch Verschmutzung, Kurzschluss oder dergleichen vom Antriebsschalter 50a das Signal "Halteantrieb 33a, 33b an" und/oder "Verriegeln" und/oder "Entriegeln" kommt, startet die Steuerung 52 den Halteantrieb 33a, 33b nicht.

Während einer Bestromung des Halteantriebs 33a, 33b oder einer Betätigung des Antriebsschalters 50a ist es vorteilhaft, dass die Steuerung 52 das Zeitintervall gegebenenfalls verlängert, um eine vollständige Verriegelung oder Entriegelung zu ermöglichen.

Eine Sicherheitsmaßnahme kann zudem vorsehen, dass die Steuerung 52 den Halteantrieb 33a, 33b nur während einer Betätigung des jeweiligen Antriebsschalters 50a oder 50b bestromt, das heißt, dass der Verriegelungsvorgang oder Entriegelungsvorgang beim Loslassen des jeweiligen Antriebsschalters 50a, 50b abgebrochen wird. Dabei kann es vorteilhaft sein, wenn die Steuerung 52 den Halteantrieb 33a, 33b zu einer Entriegelungsbewegung 99 beziehungsweise Entriegelung ansteuert.

Die Verriegelungseinrichtung 31a, 31b hat zum Anschluss an das Bordnetz 97 beispielsweise elektrische Kontakte, insbesondere eine Anschlussbuchse. Die Kontakte sind beispielsweise an einem Steuerungsgehäuse 59 angeordnet, in dessen Innenraum die elektrischen Komponenten der Steuerung 52 angeordnet sind.

Die Steuerung 52 umfasst beispielsweise einen Mikrocontroller, einen FPGA oder sonstige, zweckmäßigerweise programmierbare Komponenten.

Eine Variante der Erfindung sieht vorteilhaft vor, dass die Steuerung 52 beispielsweise auf eine oder mehrere der vorgenannten Auslösebedingungen programmierbar ist. Auch sonstige Parameter, beispielsweise eine Länge des Zeitintervalls zur Aktivierung der Antriebsschalter 50a, 50b, sind zweckmäßigerweise parametrierbar oder programmierbar, beispielsweise über ein Diagnosegerät einer Werkstatt. Vorteilhaft ist es, wenn ein Bediener selbst, z.B. im Cockpit 89, die Länge des Zeitintervalls und/oder sonstige Parameter der Steuerung 52 einstellen kann. Wenn der Bediener die vorteilhafte Bediensicherheit und Fehlmanipulationssicherheit nicht wünscht, kann er das Zeitintervall beispielsweise auf unendlich programmieren, so dass es sozusagen nie endet und der Antriebsschalter 50a und/oder 50b stets aktiviert sind. Zweckmäßigerweise ist allerdings die Auslösebedingung, dass der Antriebsmotor 82 des Fahrzeugs 80 während eines Verriegelns oder Entriegelns der Anhängekupplung 10a außer Betrieb ist, nicht ausparametrierbar.

Zweckmäßigerweise hat eine erfindungsgemäße Halteeinrichtung eine manuell betätigbare Notbetätigung, z.B. einen Bowdenzug, der auf das Halteglied wirkt. Beispielhaft ist eine auf den Betätigungshebel 39 wirkende Notbetätigung 44 in Figur 3 eingezeichnet.

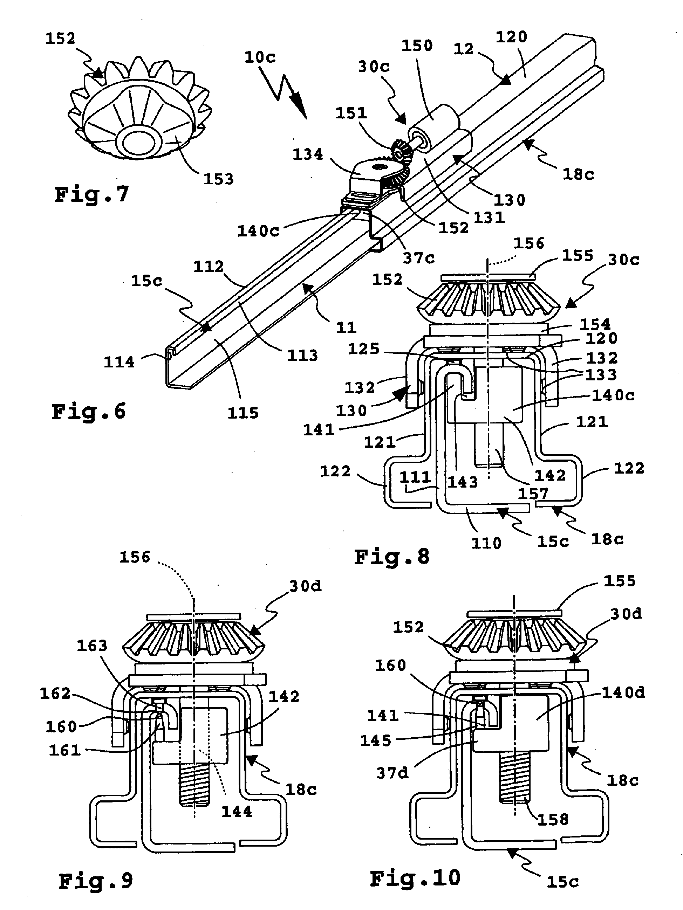

Eine nachfolgend mit Bezug auf die Figuren 6-10 beschriebene Halteeinrichtung 30c, 30d bildet in der Ausgestaltung gemäß Figuren 6, 8 eine Klemmeinrichtung, in der Ausgestaltung gemäß Figuren 9 und 10 eine kombinierte Verriegelungseinrichtung und Klemmeinrichtung.

Die Führungsschiene 15c, an der eine Läuferschiene 18c verschieblich gelagert ist, hat ein von dem Ausführungsbeispiel gemäß Figuren 1, 3 und 4 abweichendes Profil, wobei das Grundprinzip der verschieblichen Lagerung nach wie vor gegeben ist. An dieser Stelle sei allerdings bemerkt, dass das motorische Haltekonzept, insbesondere Verriegelungs- und Klemmkonzept, insbesondere auch die Kombination eines Klemmens und/oder Verriegelns, was in Bezug auf Figuren 9 und 10 deutlich wird, nicht nur bei beweglichen Bauteilen in der Art eines Schlittens vorteilhaft anwendbar ist, sondern auch bei Lastenträgern, bei denen sonstige bewegliche Bauteile verriegelt und verspannt bzw. verklemmt werden sollen, beispielsweise Lastenaufsätze, die schwenk- und/oder schiebebeweglich an einer Tragbasis gelagert sind. Dies wird jedoch nachfolgend noch deutlich.

Der in Figur 6 nur teilweise in Gestalt seiner Führungs- und Läuferschienen dargestellte Lastenträger 10c baut im Prinzip ähnlich auf wie der Lastenträger 10 gemäß Figur 1, hat jedoch andere Schienen und ein anderes Verriegelungs- und Klemmkonzept. Allerdings könnte das Ausführungsbeispiel gemäß Figur 8 auch in Kombination mit der Verriegelung gemäß Figuren 3 und 4 vorgesehen sein, d.h. dass für das Verklemmen und das Verspannen und/oder das Lösen der Verriegelung oder Klemmung zwei unterschiedliche Antriebe, insbesondere Elektroantriebe oder fluidische Antriebe, vorgesehen ein können, wobei eine Verriegelung und Verspannung bei dem Ausführungsbeispiel gemäß Figuren 9 und 10 bereits durch einen einzigen elektrischen und/oder fluidischen Antrieb, aber alternativ oder ergänzend auch durch einen manuellen Antrieb, realisierbar ist.

Die Führungsschienen 15c haben einen Grundschenkel 110, von dem sich ein Tragschenkel 111 winkelig weg erstreckt, beispielsweise rechtwinkelig, so dass ein L gebildet ist. Am vom Grundschenkel 110 entfernten Ende hat die Führungsschiene 15c einen Stützschenkel 112, der zum Tragschenkel 111 winkelig ist, beispielsweise rechtwinkelig. An den Stützschenkel 112 schließt sich ein Führungsschenkel 113 an. Der Führungsschenkel 113 und der Tragschenkel 111 liegen einander gegenüber, so dass sie zusammen mit dem Stützschenkel 112 eine Aufnahme 114 bilden, beispielsweise eine U-förmige Aufnahme. Unterhalb der Aufnahme 114 ist ein Freiraum 115 vorhanden, da nämlich der Führungsschenkel 113 wesentlich kürzer als der Tragschenkel 111 ist. Der Tragschenkel 111 wird beispielsweise an der Karosserie, insbesondere dem Boden der Lastenträgeraufnahme 87, befestigt. Es versteht sich, dass die Führungsschiene 15c auch an einem beispielsweise am Heck des Fahrzeugs 80 lösbar befestigbaren Lastenträger, beispielsweise an einem an einer Anhängekupplung befestigbaren Lastenträger oder an einem an einer Steckaufnahme oder sonstigen Halterung am Heck des Fahrzeugs 80 befestigbaren Lastenträger angeordnet sein kann.

Die Läuferschienen 18c laufen auf den Führungsschienen 15, d.h. sie sind dort linear geführt. Die Läuferschienen 18c haben ein hutförmiges Profil, d.h. sie haben einen Grundschenkel 120, von dem sich zwei Seitenschenkel 121 winkelig wegerstrecken, beispielsweise U-förmig. Vom Grundschenkel 120 entfernten Enden haben die Läuferschienen 18c einander zugewandt offene U-Profilabschitte 122, etwa in einem Bereich oberhalb des Grundschenkels 110 der Führungsschiene 15c. Der Grundschenkel 120 und der Stützschenkel 112 liegen einander gegenüber, d.h. der Grundschenkel 120 stützt sich am Stützschenkel 112 ab, wobei beispielsweise Gleitelemente 125 dazwischen angeordnet sein können, um die Gleiteigenschaften der beiden Bauteile relativ zueinander zu verbessern.

Im Bereich der Halteeinrichtung 30c ist die Läuferschiene 18c verstärkt, nämlich durch einen U-förmigen Stützkörper 130, dessen Grundschenkel 131 dem Grundschenkel 120, und dessen vom Grundschenkel 131 winkelig, beispielsweise im Wesentlichen rechtwinkelig abstehende Seitenschenkel 132 den Seitenschenkel 121 der Läuferschiene 18c gegenüberliegen und dort jeweils abgestützt sind. Der Stützkörper 130 ist fest mit der Läuferschiene 18c verbunden, beispielsweise mittels Befestigungspunkten 133, z.B. Schweiß- oder Klebe-Punkten. Selbstverständlich ist auch eine vollflächige Verbindung zwischen den beiden Bauteilen möglich.

Ein Halteglied 37c der Halteeinrichtung 30c umfasst einen Haltekörper 140c, der mit einem Halteabschnitt 141 in die Aufnahme 114 eingreift. Der Haltekörper 140c hat vorzugsweise eine blockartige oder quaderförmige Gestalt. Zwischen dem Halteabschnitt 141 und einem Grundkörper 142 des Haltekörpers 140c ist eine Ausnehmung 143 vorgesehen, beispielsweise eine Längsnut, in die der Führungsschenkel 113 eingreifen kann. Wird also der Halteabschnitt 141 in die Aufnahme 114 hineingezogen oder gedrückt, was zu einem Verklemmen oder Verspannen der Läuferschiene 18c relativ zur Führungsschiene 15c führt.

Zur Betätigung bzw. zum Verstellen des Haltekörpers 140c dient ein Halteantrieb 33c. Der Halteantrieb 33c umfasst einen insbesondere elektrischen Motor 150, der mit seinem Abtriebsrad 151 ein Antriebsrad 152 antreibt. Das Abtriebsrad 151 und das Antriebsrad 152 sind beispielsweise Kegelräder, so dass eine winkelige Anordnung der beiden Räder möglich ist. Beispielsweise ist der Motor 150 am Stützkörper 130 festgelegt.

An der Unterseite des Antriebsrads 152 sind beispielsweise Schrägflächen 153 angeordnet, nämlich Vorsprünge und Vertiefungen, die mit in der Zeichnung nicht sichtbaren Schrägflächen, d.h. Vorsprüngen und Vertiefungen, an der Oberseite des Stützkörpers 130, insbesondere einem Schrägflächenkörper 154, zusammenwirken, so dass das Antriebsrad 152 bezogen auf den Grundschenkel 131 des Stützkörpers 130 eine Hoch-Tiefbewegung macht bzw. eine Bewegung zu diesem hin oder von diesem weg. Diese ist unter anderem auch dadurch möglich, dass an der von den Schrägflächen 153 abgewandten Seite eine Feder 155 angeordnet ist, die sich an einer Halterung 134 am Stützkörper 130 abstützt, so dass das Antriebsrad 152 bezogen auf seine Drehachse 156 eine insbesondere oszillierende Linearbewegung durchlaufen kann.

Das Antriebsrad 152 ist mit einem Bolzen 157 insbesondere drehfest verbunden, der die Läuferschiene 18c und die Führungsschiene 15c durchsetzt, beispielsweise an nicht sichtbaren Bohrungen. Der Bolzen 157 oder ein sonstiger mit dem Antriebsrad 152 verbundener Vorsprung ist mit dem Haltekörper 140c fest verbunden. Somit macht der Haltekörper 140c die Linearbewegung des Antriebsrades 152 bezüglich der Drehachse 156 mit. Wenn also der Motor 150 in der einen Drehrichtung betätigt wird, wird der Haltekörper 140c in Richtung des Grundschenkels 131, 120 gezogen, d.h. der Abstand zwischen dem Halteabschnitt 141 bzw. dessen freiem, dem Boden der Aufnahme 114 zugewandten Ende, und der Grundschenkel 120, 131 verringert. Mithin wird dadurch ein Verklemmen oder ein Verspannen bewirkt. Dreht jedoch das Antriebsrad 152 in die entgegengesetzte Richtung, wird die Klemmverbindung gelöst.

Die Halteeinrichtung 30d gemäß Figuren 9, 10 unterscheidet sich von der Halteeinrichtung 30c gemäß Figur 8 dahingehend, dass anstelle des Halteabschnitts 141 ein Riegelkörper 145 bei seinem Halteglied 37d vorgesehen ist. Der Riegelkörper 145 erfüllt im Prinzip dieselbe Funktion wie der Halteabschnitt 141, kann jedoch kombiniert ein Verriegeln und Klemmen (sequenziell nacheinander) bewirken bzw. umgekehrt ein Lösen der Verspannung und anschließend ein Entriegeln.

Als weiterer Unterschied ist der Bolzen 157 mit einem Gewinde 158 versehen, das in ein nicht sichtbares Gegengewinde an einem zum Haltekörper 140c ähnlichen Haltekörper 140d eingeschraubt ist. Die Schrägflächen 153 bzw. der Schrägflächenkörper 154 sind nicht notwendig, da nämlich der Verstellhub des Haltekörpers 140d bezüglich der Drehachse 156, die zugleich eine Riegel- und Klemmachse darstellt, durch das Gewinde 158 bzw. das Gegengewinde im Haltekörper 140d bewirkt wird. Durch Einschrauben bzw. Ausschrauben des Bolzens 157 in eine Bohrung 144 am Haltekörper 140d wird also eine Auf- und Abbewegung des Haltekörpers 140 relativ zum Grundschenkel 120 bewirkt, somit also ein Verriegeln und Verspannen.

Ein Riegelkörper 145 des Halteglieds 37d umfasst an einem vorderen, freien Ende eine Riegelfläche 160 und eine Spannfläche 161. Die Riegelfläche 160 und die Spannfläche 161 sind zum Eingriff in eine Verriegelungsgegenkontur 162 an der Führungsschiene 15c vorgesehen.

Die Verriegelungsgegenkontur 162 wird beispielsweise von einer Bohrung 163 am Stützschenkel 112 gebildet. Wenn also die Halteeinrichtung 30c von der in Figur 9 dargestellten Löse- oder Entriegelungsstellung in die Verriegelung- und anschließend Spann- oder Klemmstellung verstellt wird, gelangt zunächst die Riegelfläche 160 in die Verriegelungsgegenkontur 162 bildende oder umfassende Bohrung 163, so dass dadurch bereits ein Verstellen des Schlittens 12 relativ zur Schlitten-Führungsbasis 11 verhindert ist. Der Schlitten 12 ist also verriegelt und kann sich nicht mehr bewegen. Dann schließt sich ein Verklemmen oder Verspannen an dahingehend, dass die Spannfläche 161 in die Bohrung 163 eingetrieben wird.

Während die Riegelfläche 160 beispielsweise parallel zur Drehachse bzw. Spannachse 156 verläuft, beispielsweise eine Zylindermantelfläche ist, ist die Spannfläche 161 schräg geneigt, vorliegend zweckmäßigerweise selbsthemmend schräg.

Eine Abwandlung der Halteeinrichtung 30d ist als eine Halteeinrichtung 30d' in den Figuren 11 und 12 dargestellt. Dort ist die Kombination aus Verriegelung und Verklemmen nach wie vor gegeben, allerdings unter Zwischenschaltung einer Feder, so dass eine Vorverrastung oder Vorverriegelung auch ohne Einfluss des Halteantriebs 33d gegeben ist.

Der Bolzen 157 mit seinem Gewinde 158 ist bei der Variante gemäß Figuren 11, 12 nicht in den Haltekörper 140d eingeschraubt, sondern in eine Spindelmutter 164, wobei die Spindelmutter 164 relativ zum Haltekörper 140d verschieblich ist und zwar relativ bezüglich der Drehachse 156, die zugleich eine Spannachse darstellt. Somit ist ein Bewegungsfreiraum für eine Feder 164 vorhanden, die sich einerseits am Haltekörper 140d andererseits an der Spindelmutter 164 abstützt.

Die Spindelmutter 164 ist bezüglich des Haltekörpers 140 verdrehgesichert. Beispielsweise hat sie Flachseiten 166, die sich an der Läuferschiene 18c und/oder der Führungsschiene 15c abstützen. Selbstverständlich ist auch eine andere verdrehgesicherte Linearführung möglich, d.h. dass beispielsweise Führungsvorsprünge nach unten vor den Haltekörper 140d vorstehen, die in Linearführungsaufnahmen an der Spindelmutter 164 eingreifen (nicht dargestellt).

An der Spindelmutter 164 oder, was vorliegend der Fall ist, am Haltekörper 140d ist eine Federaufnahme 167 vorhanden, in der die Feder 165 zumindest teilweise aufgenommen ist.

Die Feder 165 belastet den Haltekörper 140d in Richtung der Verriegelungsstellung, in der der Riegelkörper 154 in die Bohrung 163 eingereift, siehe Figur 12. Wenn also die Halteeinrichtung 30d' gelöst ist, d.h. die Spindelmutter 164 vom Haltekörper 140d, mithin also den Riegelkörper 145, weg verstellt ist, belastet die Feder 165 den Haltekörper 140d von der Spindelmutter 164 weg in Richtung der Verriegelungsstellung, was ein Verriegeln oder Vorverrasten bewirkt.

Am freien Endbereich des Bolzens 167 ist zweckmäßigerweise ein Sicherungskörper 168 vorhanden, der verhindert, dass die Spindelmutter 164 vom Bolzen 157 vollständig abgespindelt wird, sondern an diesem auch dann verbleibt, wenn die Halteeinrichtung 30d' gelöst ist (Figur 12), jedoch noch verriegelt.

Wenn der Motor 150 in Richtung der Verriegelungs- und Klemmstellung betätigt wird, schraubt er sozusagen die Spindelmutter 164 in Richtung des Haltekörpers 140d, der sich dann unmittelbar an der Spindelmutter 164 abstützt. Dabei wird die Feder 164 komprimiert, so dass sie in die Federaufnahme 167 eintaucht. Zugleich treibt die Spindelmutter 164 den Riegelkörper 145 in die Bohrung 163 im Sinne eines Klemmens oder Spannens hinein, so dass die Läuferschiene 18c relativ zur Führungsschiene 15c verklemmt und verspannt ist.

Vorzugsweise ist die Feder 165 eine Kegelfeder, deren Windungen im komprimierten Zustand zumindest teilweise ineinander passen. Das ist jedoch vorteilhaft, jedoch nicht notwendig.

Die Spannmutter 164 bildet also ein Spannelement, gegenüber dem das Halteglied 37d beweglich ist, wobei zwischen dem Halteglied und dem Spannelement eine Federanordnung angeordnet ist. Bei einer erfindungsgemäßen Halteeinrichtung ist es also zweckmäßig, wenn das Halteglied in eine Verriegelungsstellung federbelastet ist, durch ein zusätzliches Spannglied jedoch noch in eine Spannstellung verlagerbar ist.

## Patentansprüche

1. Lastenträger für ein Fahrzeug (80), insbesondere einen Personenkraftwagen, mit einem bezüglich einer Tragbasis schwenkbar oder verschiebbaren Tragegestell oder mit einer Schlitten-Führungsbasis (11) zur Montage an einer Lastenträgeraufnahme (87) des Fahrzeugs (80) und mit einem an der Schlitten-Führungsbasis (11) geführten, zwischen einer Ruhestellung (R) und einer Gebrauchsstellung (G) verstellbaren Schlitten (12), wobei der Schlitten (12) in der Gebrauchsstellung (G) bei am Fahrzeug (80) montiertem Lastenträger zum Tragen einer Last vor ein Heck (83) des Fahrzeugs (80) vorsteht, und mit einer mindestens ein Halteglied (37; 37c; 37d) aufweisenden Halteeinrichtung (30a; 30b; 30c; 30d), die in einer Haltestellung den Schlitten (12) in mindestens einer Stellung bezüglich der Schlitten-Führungsbasis (11) oder das Tragegestell bezüglich der Tragbasis hält und in einer Freigabestellung den Schlitten (12) zu einer Verstellung bezüglich der Schlitten-Führungsbasis (11) oder das Tragegestell bezüglich der Tragbasis freigibt, **dadurch gekennzeichnet, dass** die Halteeinrichtung (30a; 30b; 30c; 30d) einen mit einem Antriebsschalter (50a; 50b) schaltbaren elektrischen oder fluidischen Halteantrieb (33a; 33b) zum Verstellen des mindestens einen Halteglieds (37; 37c; 37d) in die Freigabestellung und/oder die Haltestellung aufweist, und dass das mindestens eine Halteglied (37; 37c; 37d) eine Riegelfläche (160) und eine Spannfläche (161) aufweist, die bezogen auf eine Verriegelungsbewegung oder Entriegelungsbewegung des mindestens einen Halteglieds (37; 37c; 37d) benachbart angeordnet sind und zur Zusammenwirkung mit einer Verrieglungsgegenkontur (162) und einer an der Verrieglungsgegenkontur vorgesehenen Spanngegenkontur vorgesehen ist derart, dass bei der Verriegelungsbewegung zunächst die Riegelfläche und die Verrieglungsgegenkontur (162) und dann die Spannfläche mit der Spanngegenkontur in Eingriff miteinander gelangen.

2. Lastenträger nach Anspruch 1, **dadurch gekennzeichnet, dass** er eine den Schlitten (12) in die Gebrauchsstellung (G) belastende Auswurf-Federanordnung (17) aufweist.

3. Lastenträger nach Anspruch 1 oder 2, **dadurch gekennzeichnet, dass** das mindestens eine Halteglied (37; 37c; 37d) einen Riegel (32) oder ein Formschlussglied zu einem Formschluss mit einer Formschlussgegenkontur oder ein Spannelement und mindestens eine Spannfläche zum Verspannen des Schlittens (12) bezüglich der Schlitten-Führungsbasis (11) aufweist oder bildet.

4. Lastenträger nach einem der vorhergehenden Ansprüche, **dadurch gekennzeichnet, dass** der Halteantrieb (33a; 33b) ein Spanngetriebe oder Klemmgetriebe oder ein Übetragungsgetriebe aufweist.

5. Lastenträger nach einem der vorhergehenden Ansprüche, **dadurch gekennzeichnet, dass** die Schlitten-Führungsbasis (11) Führungsschienen (15; 15c) aufweist, an denen Läuferschienen (18; 18c) des Schlittens (12) geführt sind, wobei das mindestens eine Halteglied (37; 37c; 37d) zweckmäßigerweise mindestens eine der Führungsschienen (15; 15c) oder mindestens eine der Läuferschienen (18; 18c) in der Haltestellung durchgreift oder einen Längsanschlag für mindestens eine der Läuferschienen (18; 18c) bildet.

6. Lastenträger nach einem der vorhergehenden Ansprüche, **dadurch gekennzeichnet, dass** das mindestens eine Halteglied (37; 37c; 37d) durch eine Federanordnung (38, 165) in die Haltestellung federbelastet ist, wobei die Federanordnung (165) zweckmäßigerweise zwischen dem mindestens einen Halteglied (37; 37c; 37d) und einem Spannelement angeordnet ist, mit dem das mindestens eine Halteglied (37; 37c; 37d) in eine Klemm- oder Spannstellung verstellbar ist.

7. Lastenträger nach einem der vorhergehenden Ansprüche, **dadurch gekennzeichnet, dass** der Antriebsschalter (50a; 50b) zur Anordnung in einem Außenbereich des Fahrzeug (80) ausgestaltet ist oder dass der Antriebsschalter (50a; 50b) an dem Schlitten (12), insbesondere hinter oder an einem Kennzeichenträger (13), angeordnet ist oder eine Halterung zur Befestigung am Heck (83) des Fahrzeugs (80) aufweist, wobei die Halterung vorteilhaft einen Bestandteil eines Heckstoßfängers (86) des Fahrzeugs (80) bildet oder zur Anordnung an dem Heckstoßfänger (86) ausgestaltet ist.

8. Lastenträger nach einem der vorhergehenden Ansprüche, **dadurch gekennzeichnet, dass** er einen Empfänger (56) zur drahtlosen Ansteuerung (52) des Antriebsschalters (50a; 50b) oder als Bestandteil des Antriebsschalters (50a; 50b) aufweist, wobei der Empfänger (56) vorteilhaft einen im Wesentlichen auf die Umgebung des Lastenträgers, insbesondere auf 50cm bis 200cm, begrenzten Empfangsbereich (58) aufweist.

9. Lastenträger nach einem der vorhergehenden Ansprüche, **dadurch gekennzeichnet, dass** er eine Steuerung (52) aufweist, die den Halteantrieb (33a; 33b) periodisch abhängig von einer Erstbetätigung durch den Antriebsschalter (50a; 50b) in die Haltestellung oder in die Freigabestellung wiederholt zu einer Betätigung des mindestens einen Halteglieds (37; 37c; 37d) in die Haltestellung oder in die Freigabestellung mit Energie versorgt, insbesondere bestromt.

10. Lastenträger nach einem der vorhergehenden Ansprüche, **dadurch gekennzeichnet, dass** er eine Steuerung (52) zur Aktivschaltung oder Deaktivierung des Halteantriebs (33a; 33b) oder des Antriebsschalters (50a; 50b) anhand mindestens einer Aktivierungsbedingung aufweist.

11. Lastenträger nach Anspruch 10, **dadurch gekennzeichnet, dass** die Steuerung (52) den Antriebsschalter (50a; 50b) oder den Halteantrieb (33a; 33b) anhand der mindestens einen Aktivierungsbedingung für ein Zeitintervall aktiv schaltet, wobei der Halteantrieb (33a; 33b) in dem Zeitintervall durch den Antriebsschalter (50a; 50b) startbar ist und/oder dass die Steuerung (52) einen Sensoreingang und/oder einen Sensor aufweist und zur Auswertung eines Sensorsignals des Sensors als Aktivierungsbedingung ausgestaltet ist und/oder dass die mindestens eine Aktivierungsbedingung ein Unterschreiten einer Grenzgeschwindigkeit des Fahrzeugs (80), insbesondere ein Stillstand des Fahrzeugs (80), und/oder einen Stillstand eines Fahrzeug-Motors (83) des Fahrzeugs (80) und/oder eine Bedingung "Fahrzeugtüren-Entriegelt (32)" und/oder "Heckklappe-Entriegelt" umfasst und/oder dass die mindestens eine Aktivierungsbedingung ein von einem Freigabeschalter (55a-55c) sendbares Freigabesignal ist und/oder dass die mindestens eine Aktivierungsbedingung eine Bestromung einer Leuchte (93-95) des Fahrzeugs (80) und/oder des Lastenträgers umfasst.

12. Lastenträger nach Anspruch 11, **dadurch gekennzeichnet, dass** der Freigabeschalter (55a-55c) im Innenraum des Fahrzeugs, insbesondere an einem Cockpit des Fahrzeugs (80) oder in einem Gepäckabteil (85) des Fahrzeugs (80), anordenbar ist oder einen an einem Fahrzeugschlüssel (91) für das Fahrzeug (80) oder in einem Schlüsselanhängergehäuse angeordneten Sender umfasst, und dass der Lastenträger einen Funkempfänger (56) zum Empfang des Freigabesignals umfasst.

13. Lastenträger nach einem der vorhergehenden Ansprüche, **dadurch gekennzeichnet, dass** er mindestens eine optische oder akustische Funktionsanzeigeeinrichtung (88) für mindestens eine Funktionsanzeige der Halteeinrichtung (30a; 30b; 30c; 30d) aufweist und/oder mindestens einen Signalausgang (53) zur Ansteuerung einer Funktionsanzeigeeinrichtung (88) des Fahrzeugs (80) aufweist.

## Claims

1. Load carrier for a vehicle (80), in particular a car, with a support frame which is pivotable or movable relative to a support base or with a carriage guide base (11) for fitting to a load carrier seating (87) of the vehicle (80) and with a carriage (12), guided on the carriage guide base (11) and adjustable between a rest position (R) and a position of use (G), wherein the carriage (12) in the position of use (G), with the load carrier fitted to the vehicle (80) to carry a load, protrudes from the rear (83) of the vehicle (80), and with at least one holding device (30a; 30b; 30c; 30d) with a holding element (37; 37c; 37d) which in a holding position holds the carriage (12) in at least one position relative to the carriage guide base (11) or holds the support frame relative to the support base, and in a release position releases the carriage (12) for adjustment relative to the carriage guide base (11) or releases the support frame relative to the support base, **characterised in that** the holding device (30a; 30b; 30c; 30d) has an electrical or fluidic holding drive (33a; 33b) switchable by a drive switch (50a, 50b), for shifting the holding element or elements (37; 37c; 37d) into the release position and/or holding position, and that the holding element or elements (37; 37c; 37d) has or have a bolt surface (160) and a clamping surface (161) which, relative to a locking movement or unlocking movement of the holding element or elements (37; 37c; 37d), are arranged adjacent to one another and are provided for interaction with a mating locking contour (162) and a mating clamping contour provided on the mating locking contour so that, during the locking movement, first the bolt surface and the mating locking contour (162), and then the clamping surface engage with the clamping mating contour

2. Load carrier according to claim 1, **characterised in that** it has an eject spring assembly (17) biasing the carriage (12) in the position of use (G).

3. Load carrier according to claim 1 or 2, **characterised in that** the holding element or elements (37; 37c; 37d) have or form a bolt (32) or an interlocking member for a positive fit with a mating interlocking contour and/or a clamping element and at least one clamping surface for clamping the carriage (12) relative to the carriage guide base (11).

4. Load carrier according to any of the preceding claims, **characterised in that** the holding drive (33a; 33b) has a clamping gear or gripping gear or a transmission gear.

5. Load carrier according to any of the preceding claims, **characterised in that** the carriage guide base (11) has guide rails (15; 15c) on which are guided running rails (18; 18c) of the carriage (12), wherein the holding element or elements (37; 37c; 37d) expediently pass through at least one of the guide rails (15; 15c) or at least one of the running rails (18; 18c) in the holding position or form a longitudinal stop for at least one of the running rails (18; 18c).

6. Load carrier according to any of the preceding claims, **characterised in that** the holding element or elements (37; 37c; 37d) is or are spring-loaded in the holding position by a spring assembly (38, 165), wherein the spring assembly (165) is expediently provided between the holding element or elements (37; 37c; 37d) and a clamping element, by which the holding element or elements (37; 37c; 37d) may be shifted into a gripping or clamping position.

7. Load carrier according to any of the preceding claims, **characterised in that** the drive switch (50a, 50b) is designed for mounting in an outer area of the vehicle (80) or that the drive switch (50a, 50b) is mounted on the carriage (12), in particular behind or on a license plate holder (13) or has a a bracket for fastening to the rear (83) of the vehicle (80), wherein the bracket advantageously forms an integral part of a rear bumper (86) of the vehicle (80) or is designed for mounting on the rear bumper (86).

8. Load carrier according to any of the preceding claims, **characterised in that** it has a receiver (56) for wireless control activation (52) of the drive switch (50a, 50b) or as a component of the drive switch (50a, 50b), wherein the receiver (56) advantageously has a receiving range (58) substantially limited to the vicinity of the load carrier, in particular 50 cm to 200 cm.

9. Load carrier according to any of the preceding claims, **characterised in that** it has a controller (52) which periodically, depending on an initial actuation by the drive switch (50a, 50b) into the holding position or into the release position, repeatedly supplies power, in particular energizes the holding drive (33a; 33b) to actuate the holding element or elements (37; 37c; 37d) into the holding position or the release position.

10. Load carrier according to any of the preceding claims, **characterised in that** it has a controller (52) for activating or deactivating the holding drive (33a; 33b) or the drive switch (50a, 50b) on the basis of at least one activation condition.

11. Load carrier according to claim 10, **characterised in that** the controller (52) activates the drive switch (50a, 50b) or the holding drive (33a; 33b) for a time interval on the basis of the activation condition or conditions, wherein the holding drive (33a; 33b) may be started in the time interval by the drive switch (50a, 50b) and/or that the controller (52) has a sensor input and/or a sensor and is designed to evaluate a sensor signal of the sensor as activation condition and/or that the activation condition or conditions includes or include falling below a limit speed of the vehicle (80), in particular standstill of the vehicle (80) and/or standstill of a vehicle engine (83) of the vehicle (80) and/or a condition "vehicle doors unlocked (32)" and/or "tailgate unlocked" and/or that the activation condition or conditions is or are a release signal which may be transmitted by a release switch (55a-55c) and/or that the activation condition or conditions is or are the supply of power to a lamp (93-95) of the vehicle (80) and/or the load carrier.

12. Load carrier according to claim 11, **characterised in that** the release switch (55a-55c) may be provided in the interior of the vehicle, in particular at a driver's seat of the vehicle (80) or in a luggage compartment (85) of the vehicle (80), and/or include a transmitter provided on a vehicle key (91) for the vehicle (80) or in a key attachment case, and that the load carrier includes a radio receiver (56) to receive the release signal.

13. Load carrier according to any of the preceding claims, **characterised in that** it has at least one visual and/or audible function display device (88) for at least one function display of the holding device (30a; 30b; 30c; 30d) and/or at least one signal output (53) for activating a function display device (88) of the vehicle (80).

## Revendications

1. Support de charge pour un véhicule (80), en particulier une voiture particulière, avec un bâti de support coulissant ou pivotant par rapport à une base porteuse ou avec une base de guidage de chariot (11) pour le montage sur un logement de support de charge (87) du véhicule (80) et avec un chariot (12) guidé sur la base de guidage de chariot (11), déplaçable entre une position de repos (R) et une position d'utilisation (G), le chariot (12) dépassant d'une partie arrière (83) du véhicule (80) dans la position d'utilisation (G) lorsque le support de charge est monté sur le véhicule (80) pour le support d'une charge, et avec un dispositif de retenue (30a ; 30b ; 30c ; 30d) présentant au moins un organe de retenue (37 ; 37c ; 37d) qui maintient dans une position de retenue le chariot (12) dans au moins une position par rapport à la base de guidage de chariot (11) ou le bâti de support par rapport à la base porteuse et libère dans une position de libération le chariot (12) pour un déplacement par rapport à la base de guidage de chariot (11 ) ou le bâti de support par rapport à la base porteuse, **caractérisé en ce que** le dispositif de retenue (30a ; 30b ; 30c ; 30d) présente un entraînement de retenue (33a ; 33b) électrique ou fluidique commutable avec un commutateur d'entraînement (50a ; 50b) pour le déplacement de l'au moins un organe de retenue (37 ; 37c ; 37d) dans la position de libération et/ou la position de retenue, et **en ce que** l'au moins un organe de retenue (37 ; 37c ; 37d) présente une surface de verrou (160) et une surface de serrage (161) qui sont disposées de manière contiguë par rapport à un mouvement de verrouillage ou un mouvement de déverrouillage de l'au moins un organe de retenue (37 ; 37 ; 37d) et est prévu pour la coaction avec un contour antagoniste de verrouillage (162) et un contour antagoniste de serrage prévu sur le contour antagoniste de verrouillage de telle manière que lors du mouvement de verrouillage parviennent en engagement l'un avec l'autre tout d'abord la surface de verrou avec le contour antagoniste de verrouillage (162) puis la surface de serrage avec le contour antagoniste de serrage.

2. Support de charge selon la revendication 1, **caractérisé en ce qu'**il présente un agencement à ressort d'éjection (17) sollicitant le chariot (12) dans la position d'utilisation (G).

3. Support de charge selon la revendication 1 ou 2, **caractérisé en ce que** l'au moins un organe de retenue (37 ; 37c ; 37d) présente ou forme un verrou (32) ou un organe à complémentarité de formes pour une complémentarité de formes avec un contour antagoniste à complémentarité de formes ou un élément de serrage et au moins une surface de serrage pour le serrage du chariot (12) par rapport à la base de guidage de chariot (11).

4. Support de charge selon l'une quelconque des revendications précédentes, **caractérisé en ce que** l'entraînement de retenue (33a ; 33b) présente un mécanisme de serrage ou un mécanisme de blocage ou un mécanisme de transmission.

5. Support de charge selon l'une quelconque des revendications précédentes, **caractérisé en ce que** la base de guidage de chariot (11) présente des rails de guidage (15 ; 15c), sur lesquels des rails de rotor (18 ; 18c) du chariot (12) sont guidés, l'au moins un organe de retenue (37 ; 37c ; 37d) recouvrant de manière appropriée au moins l'un des rails de guidage (15 ; 15c) ou au moins l'un des rails de rotor (18 ; 18c) dans la position de retenue ou formant une butée longitudinale pour au moins l'un des rails de rotor (18 ; 18c).

6. Support de charge selon l'une quelconque des revendications précédentes, **caractérisé en ce que** l'au moins un organe de retenue (37 ; 37c ; 37d) est sollicité par ressort par un agencement à ressort (38, 165) dans la position de retenue, l'agencement à ressort (165) étant disposé de manière appropriée entre l'au moins un organe de retenue (37 ; 37c ; 37d) et un élément de serrage, avec lequel l'au moins un organe de retenue (37 ; 37c ; 37d) peut être déplacé dans une position de blocage ou de serrage.

7. Support de charge selon l'une quelconque des revendications précédentes, **caractérisé en ce que** le commutateur d'entraînement (50a ; 50b) est configuré pour l'agencement dans une zone extérieure du véhicule (80) ou en ce que le commutateur d'entraînement (50a ; 50b) est agencé sur le chariot (12), en particulier derrière ou sur une plaque d'immatriculation (13), ou présente un support pour la fixation sur l'arrière (83) du véhicule (80), le support formant avantageusement un élément d'un pare-choc arrière (86) du véhicule (80) ou étant équipé pour l'agencement sur le pare-choc arrière (86).

8. Support de charge selon l'une quelconque des revendications précédentes, **caractérisé en ce qu'**il présente un récepteur (56) pour la commande sans fil (52) du commutateur d'entraînement (50a ; 50b) ou en guise d'élément du commutateur d'entraînement (50a ; 50b), le récepteur (56) présentant avantageusement une zone de réception (58) limitée sensiblement à l'environnement du support de charge, en particulier allant de 50 à 200 cm.

9. Support de charge selon l'une quelconque des revendications précédentes, **caractérisé en ce qu'**il présente une commande (52) qui alimente en énergie, en particulier alimente en électricité, l'entraînement de retenue (33a ; 33b) périodiquement en fonction d'un premier actionnement par le commutateur d'entraînement (50a ; 50b) dans la position de retenue ou dans la position de libération de façon répétée pour un actionnement de l'au moins un organe de retenue (37 ; 37c ; 37d) dans la position de retenue ou dans la position de libération.

10. Support de charge selon l'une quelconque des revendications précédentes, **caractérisé en ce qu'**il présente une commande (52) pour l'activation ou la désactivation de l'entraînement de retenue (33a ; 33b) ou du commutateur d'entraînement (50a ; 50b) à l'aide d'au moins une condition d'activation.

11. Support de charge selon la revendication 10, **caractérisé en ce que** la commande (52) active le commutateur d'entraînement (50a ; 50b) ou l'entraînement de retenue (33a ; 33b) à l'aide de l'au moins une condition d'activation pour un intervalle de temps, l'entraînement de retenue (33a ; 33b) pouvant être démarré dans l'intervalle de temps par le commutateur d'entraînement (50a ; 50b), et/ou **en ce que** la commande (52) présente une entrée de capteur et/ou un capteur et est configurée pour l'évaluation d'un signal de capteur du capteur comme condition d'activation et/ou **en ce que** l'au moins une condition d'activation comporte un passage sous une vitesse limite du véhicule (80), en particulier un arrêt du véhicule (80), et/ou un arrêt d'un moteur de véhicule (83) du véhicule (80) et/ou une condition « Portes de véhicule déverrouillées (32) » et/ou « Hayon déverrouillé » et/ou **en ce que** l'au moins une condition d'activation est un signal de libération pouvant être émis par un commutateur de libération (55a-55c) et/ou **en ce que** l'au moins une condition d'activation comporte une alimentation en électricité d'une lampe (93-95) du véhicule (80) et/ou du support de charge.

12. Support de charge selon la revendication 11, **caractérisé en ce que** le commutateur de libération (55a-55c) peut être disposé à l'intérieur du véhicule, en particulier dans un habitacle du véhicule (80) ou dans un compartiment à bagages (85) du véhicule (80), ou comporte un émetteur agencé sur une clé de véhicule (91) pour le véhicule (80) ou dans un boîtier de remorque de clé et **en ce que** le support de charge comporte un récepteur radio (56) pour la réception du signal de libération.

13. Support de charge selon l'une quelconque des revendications précédentes, **caractérisé en ce qu'**il présente au moins un dispositif d'affichage fonctionnel (88) optique ou acoustique pour au moins un affichage fonctionnel du dispositif de retenue (30a ; 30b ; 30c ; 30d) et/ou présente au moins une sortie de signal (53) pour la commande d'un dispositif d'affichage fonctionnel (88) du véhicule (80).
